# EUROPÄISCHE PATENTSCHRIFT

(11) **EP 1 829 357 B1**
(45) Veröffentlichungstag und Bekanntmachung des Hinweises auf die Patenterteilung: **06.08.2008**
(21) Anmeldenummer: 05825324.6
(22) Anmeldetag: 19.12.2005
(51) Int. Cl.: H04N 1/32

(54) **VORRICHTUNG ZUM AUSBILDEN EINES DRUCKBILDES AN MINDESTENS EINER DRUCKBILDSTELLE**
DEVICE FOR PRODUCING A PRINTED IMAGE AT AT LEAST ONE PRINTED IMAGE LOCATION
DISPOSITIF POUR FORMER UNE IMAGE A IMPRIMER SUR AU MOINS UN EMPLACEMENT POUR UNE IMAGE

(30) Priorität: 20.12.2004 DE 102004061207; 19.04.2005 DE 102005018367
(43) Veröffentlichungstag der Anmeldung: 05.09.2007
(73) Patentinhaber: Koenig & Bauer Aktiengesellschaft, 97080 Würzburg (DE)
(72) Erfinder: BIRKENFELD, Andreas, Stefan, 97753 Karlstadt - Hesslar (DE); TÜRKE, Thomas, 33699 Bielefeld (DE)
(86) Internationale Anmeldenummer: PCT/EP2005/056918
(87) Internationale Veröffentlichungsnummer: WO 2006/067117

(56) Entgegenhaltungen:
- DE-A1- 10 001 211
- DE-A1- 10 251 573

## Beschreibung

Die Erfindung betrifft eine Vorrichtung zum Ausbilden eines Druckbildes an mindestens einer Druckbildstelle gemäß dem Oberbegriff des Anspruchs 1.

Durch die DE 102 51 573 A1 ist eine Anordnung zur schnellen Bilddatenübertragung bei Druckmaschinen sowie ein entsprechendes Verfahren bekannt, wobei Speichereinheiten mittels eines Bussystems sowohl mit einem als Datenmanager ausgebildeten Rechner zur Zwischenpufferung der von einem RIP (Rasterimageprozessor) empfangenen Bilddaten als auch mit der Bebilderungseinheit zur Bebilderung verbunden sind, wobei jede Bebilderungseinheit jeweils mit einer der Speichereinheiten kommuniziert und die Bilddaten direkt aus der jeweiligen Speichereinheit liest.

Durch die DE 100 01 211 A1 ist ein Verfahren zur Erzeugung von Rasterdaten für Bebilderungseinheiten einer Druckmaschine bekannt, bei dem Rohbilddaten in eine Mehrzahl von Teilbildern, die jeweils einer Druckfarbe entsprechen, zerlegt, die Teilbilder an eine Mehrzahl von Rasterprozessoren entsprechend der Anzahl der zu druckenden Farben ausgegeben und die Teilbilder durch die Rasterprozessoren zu Rasterdaten für die Ausgabe an jeweils eine der Bebilderungseinheiten zeitgleich verarbeitet werden.

Durch die EP 1 559 549 A1 ist eine mehrere Formzylinder aufweisende Druckmaschine mit einer Steuereinheit bekannt, wobei die in der Druckmaschine angeordnete Steuereinheit über einen LAN mit einem RIP (raster image processor) verbunden ist, wobei die Steuereinheit vom RIP erzeugte Druckdaten mehrerer Druckaufträge in zuvor festgelegten zeitlichen Intervallen oder zu bestimmten Zeitpunkten über den LAN in einen Speicher der Steuereinheit herunterlädt, wobei die einzelnen Druckaufträge an einer mit der Steuereinheit verbundenen Anzeigeeinrichtung auswählbar sind.

Durch die DE 103 53 870 A1 ist ein System zur digitalen Bebilderung bekannt, wobei eine in einer Druckmaschine angeordnete, einem Druckwerk zugeordnete Bildaufbereitungseinheit einen Raster Image Processor (RIP) und einen Datenpuffer umfasst, wobei die Bildaufbereitungseinheit mit einer Druckvorstufenschnittstelle verbunden ist, über welche Bilddaten in die Bildaufbereitungseinheit gelangen können.

Durch die US 2003/0048467 A1 ist ein Bebilderungssystem bekannt, welches an ein lokales Netzwerk, z. B. einen LAN, oder an ein öffentliches Netzwerk, z. B. das Internet, angeschlossen ist.

Durch die EP 0 997 850 A1 ist bekannt, einen Raster Image Processor (RIP) z. B. in einem FPGA (Field Programmable Gate Array) auszuführen.

Der Erfindung liegt die Aufgabe zugrunde, eine Vorrichtung zum Ausbilden eines Druckbildes an mindestens einer Druckbildstelle zu schaffen, wobei der Rasterungsprozess jeweils schneller und bedarfsgerechter ausführbar ist.

Die Aufgabe wird erfindungsgemäß durch die Merkmale des Anspruchs 1 gelöst.

Die mit der Erfindung erzielbaren Vorteile bestehen insbesondere darin, dass ein Rasterungsprozess schneller und bedarfsgerechter ausführbar ist. Die Entscheidung, welches Druckbild an welcher Druckbildstelle ausgebildet wird, kann bis kurz vor Ausführung des Druckauftrages zurückgestellt werden, denn es besteht keine starre Zuweisung von bestimmten Bilddaten zu einer bestimmten Druckbildstelle. Da jeder Rasterimageprozessor nur einen ausgewählten Teil der Bilddaten rastert, ist der Rasterungsprozess schneller ausführbar als mit einem zentralen Rasterimageprozessor, der den Rasterungsprozess für alle Teile der Bilddaten ausführt. Im Ergebnis wird eine flexible Herstellung des Druckerzeugnisses mit einer wahlfreien Zuordnung z. B. von Farbauszügen insbesondere zu Formzylindern einer Druckmaschine ermöglicht, sodass eine hohe Disponibilität hinsichtlich der am Herstellungsprozess beteiligten Maschineneinheiten besteht, was insbesondere in komplexen Druckmaschinen mit mehreren Sektionen jeweils mit mehreren Maschineneinheiten sehr vorteilhaft ist.

Die Rasterdaten, die für jede Farbseparation einer herzustellenden Seite des Druckerzeugnisses erzeugt werden, werden dezentral in unmittelbarer Nähe zur Bebilderungsvorrichtung erzeugt; sie können jeweils in einer Datei in einer Speichervorrichtung gespeichert werden. Damit entfallen zeitintensive störanfällige Ladeprozesse großer Datenmengen von der Druckvorstufe zu der Bebilderungsvorrichtung in oder zumindest an der Druckmaschine. Durch die dezentrale Rasterung werden die Rasterdaten aus längst nicht so umfangreichen und damit über ein Netzwerk z. B. zur elektronischen Kommunikation leichter transportfähigen Bilddaten dort erzeugt, wo sie benötigt werden. Durch eine Zwischenspeicherung der Rasterdaten kann außerdem ein Abriss des zu übertragenden umfangreichen Datenstromes während des Bebilderungsvorgangs vermieden und der Rasterungsprozess vom Bebilderungsprozess entkoppelt werden. Dezentral angeordnete Rasterimageprozessoren haben den Vorteil, dass diese den Rasterungsprozess parallel, d. h. gleichzeitig durchführen können, was im Vergleich zu nur einem einzigen in der Druckvorstufe zentral vorgehaltenen Rasterimageprozessor einen Zeitvorteil bedeutet. Der Rasterungsprozess kann somit im Ergebnis schneller und insbesondere unter Berücksichtigung einer die Druckbildstelle auf dem Formzylinder betreffenden Anordnungsinformation oder Belegungsinformation bedarfsgerechter ausgeführt werden.

Überdies ist es vorteilhaft vorzusehen, dass eine einem Formzylinder zugeordnete Bebilderungsvorrichtung mindestens eine Druckbildstelle bzw. Druckform bebildert, während ein anderer Formzylinder derselben Druckmaschine mit mindestens einen Druckbildstelle bzw. Druckform an einem von dieser Druckmaschine ausgeführten, laufenden Druckprozess beteiligt ist, was sich günstig auf die mit dieser Druckmaschine erzielbare Auslastung und damit Produktivität auswirkt. Das Konzept der dezentralen Bilddatenverarbeitung hat somit den Vorteil, dass jede Maschineneinheit der Druckmaschine mit ihren Druckeinheiten und ihren diversen Steuervorrichtungen eine autarke Einheit bildet, die von der Druckvorstufe empfangene Bilddaten einer herzustellenden Seite selbständig verarbeiten und auswerten kann.

Ein Kommunikationssystem, das unterschiedliche Netzwerke miteinander verknüpft, insbesondere ein Netzwerk zur Übertragung von Bilddaten an mindestens eine Bebilderungsvorrichtung mit einem Netzwerk zur Steuerung und/oder Überwachung einer Druckmaschine und/oder mit einem Netzwerk zur Kommunikation von in der Druckvorstufe zu verarbeitenden Daten, verbessert durch größere Transparenz der Prozesse die Kommunikation zwischen allen an der Herstellung eines Druckerzeugnisses beteiligten Stellen eines Unternehmens und hilft in nicht unerheblichem Maße Kosten einzusparen, die ansonsten für ein mehrfaches Vorhalten von Signalleitungen und/oder Übertragungsstrecken sowie deren Schnittstellen entstünden.

Weitere Vorteile sind der nachfolgenden detaillierten Beschreibung entnehmbar.

Ausführungsbeispiele der Erfindung sind in den Zeichnungen dargestellt und werden im Folgenden näher beschrieben.

Es zeigen:
- Fig. 1: ein Bilddatenmanagementsystem mit einer zentralen Bilddatenverwaltung in einer Sterntopologie;
- Fig. 2: ein Bilddatenmanagementsystem mit einer zentralen Bilddatenverwaltung in einer Linien- oder Ringtopologie;
- Fig. 3: ein Bilddatenmanagementsystem mit einer zentralen Bilddatenverwaltung in einer Doppelsterntopologie;
- Fig. 4: ein Bilddatenmanagementsystem mit einer lokalen Bilddatenverwaltung in einer Sterntopologie;
- Fig. 5: ein Bilddatenmanagementsystem mit einem zentralen Fileserver in einer Sterntopologie;
- Fig. 6: ein Beispiel für das Antriebsmanagement in einer Druckmaschine;
- Fig. 7: ein Beispiel eines in das Steuerungsnetzwerk einbindbaren Falzapparates.

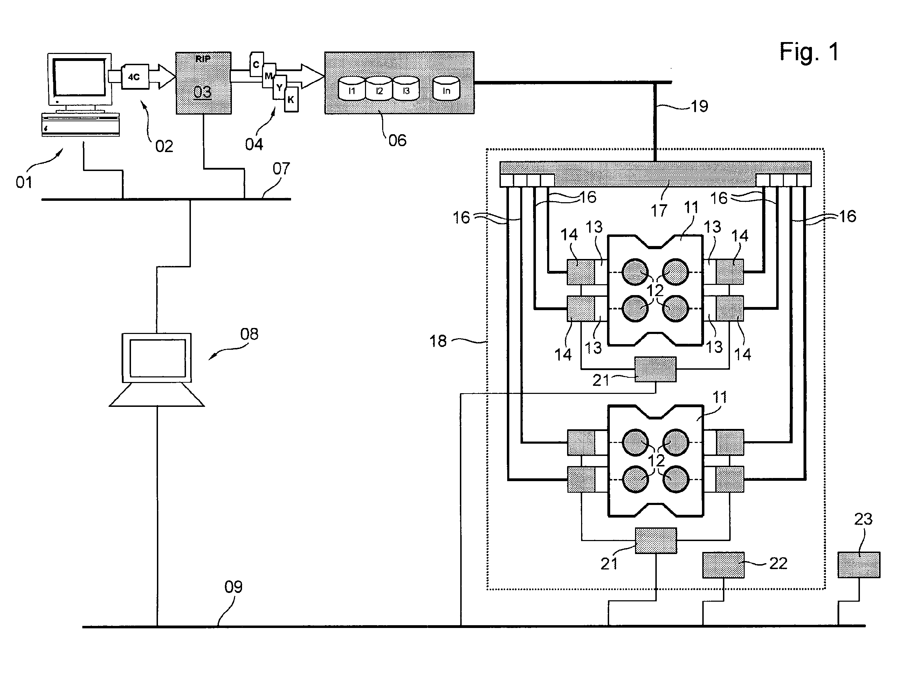

Die Fig. 1 bis 3 zeigen jeweils ein Bilddatenmanagementsystem jeweils mit einer zentralen Bilddatenverwaltung, jedoch mit einer unterschiedlichen Topologie eines Bilddaten übertragenden Netzwerkes. Allen in den Fig. 1 bis 5 dargestellten Bilddatenmanagementsystemen ist gemeinsam, dass in einem Rechner 01 einer dem eigentlichen Druckprozess vorgelagerten Druckvorstufe Bilddaten 02 jeweils zu einer vorzugsweise in mehreren, z. B. in vier verschiedenen Druckfarben zu druckenden Seite zusammengefasst werden, wobei die zu druckende Seite Text, Grafik und/oder mindestens ein Bild aufweisen kann und die Bilddaten 02 somit Informationen zum Inhalt, zur Farbe und zur Gestaltung der zu druckenden Seite beinhalten. Die Bilddaten 02 einer zu druckenden Seite eines Druckerzeugnisses werden in einer mit Methoden der elektronischen Datenverarbeitung verarbeitbaren Datei oder in einem über eine Übertragungsstrecke übertragbaren Telegramm zusammengefasst. Die Druckvorstufe ist demnach ein Arbeitsbereich, in dem eine zu druckende Seite eines Druckerzeugnisses gegebenenfalls zusammengestellt und aufbereitet, zumindest aber für den nachfolgenden Druckprozess bereitgestellt wird.

Ein mit der Druckmaschine herzustellendes Druckerzeugnis besteht i. d. R. aus mehreren bedruckten Seiten, sodass bedruckte Seiten in einer dem eigentlichen Druckprozess nachgeordneten Weiterverarbeitungsvorrichtung, z. B. in einem der Druckmaschine zugeordneten Falzapparat, entsprechend einer in der Druckvorstufe festgelegten Vorgabe gesammelt und zu dem gewünschten Druckerzeugnis zusammengefasst werden. Die mit einer jeden der zu druckenden Seiten korrespondierende Menge an Bilddaten 02 ist i. d. R. in einer einzigen Datei zusammengefasst, wobei diese Datei z. B. durchaus mehrere, im zwei- oder sogar dreistelligen Bereich liegende MB (Megabyte) betragen kann. Es ist heutzutage üblich, derartige Bilddaten 02 z. B. in Form einer pixelbasierten TIFF-Datei (Tagged Image File Format), in Form einer konturdatenkodierten postscript-Datei oder in Form einer Datei in einem Pixel- und Konturdatenstrukturen kombinierenden pdf-Format (portable document format) zur Übertragung an mindestens einen im Bearbeitungsprozess nachgeordneten Rechner zur Verfügung zu stellen. Eine jede der zu druckenden Seiten kann z. B. eine Auflösung von ca. 1200 dpi bis 2400 dpi aufweisen, sodass sich für jede der zu druckenden Seiten des Druckerzeugnisses eine Datei in der Größenordnung von 1 GBit und mehr bzw. deutlich mehr als 100 MByte ergibt. Für eine vierfarbig zu druckende Seite liegt die Datenmenge dann im Bereich von 400 MByte und mehr. Für eine komplette Zeitung mit mehreren, z. B. 48 und mehr Seiten ergibt sich dann eine Datenmenge im Bereich mehrerer GByte, deren Übertragung über ein Netzwerk hohe Anforderungen an dieses Bilddaten 02 übertragende Netzwerk stellt.

Ein solcher im Bearbeitungsprozess nachgeordneter Rechner 03 kann z. B. ein Rasterimageprozessor 03 (RIP) sein, der erforderlichenfalls die Bilddaten 02 aus der Druckvorstufe z. B. in ein pixelorientiertes Datenformat, d. h. ein Bitmap-Format umwandelt, wobei der Rasterimageprozessor 03 (RIP) durch Rechenoperationen aus den Bilddaten 02 Rasterdaten 04 erzeugt. Es kann vorgesehen sein, dass aus den Bilddaten 02 - entweder noch bevor sie dem Rasterimageprozessor 03 (RIP) zugeleitet werden oder aber im Rasterimageprozessor 03 (RIP) - vor ihrer Umwandlung in Rasterdaten 04 den Druckfarben zugeordnete Farbseparationen - auch Farbauszüge genannt - erzeugt werden, wobei jede Farbseparation ein zu druckendes Druckbild erzeugt, wobei durch einen Übereinanderdruck der zu einer Seite gehörenden Druckbilder verschiedener Farbseparationen auf einem Bedruckstoff, z. B. einer Materialbahn oder einem Druckbogen, die in dem Druckprozess herzustellende Seite entsteht. Im Vierfarbendruck sind die den vier Druckfarben Cyan, Magenta, Gelb und Schwarz zugeordneten Farbauszüge C, M, Y und K üblich. Der Rasterimageprozessor 03 (RIP) erzeugt für jede der Druckfarben die mit der jeweiligen Farbseparation einhergehenden Rasterdaten 04, wobei die jeweils zu einer der Farbseparationen gehörenden Rasterdaten 04 jeden von der jeweiligen Farbseparation mit einem Druckwerk einer Druckmaschine auf den Bedruckstoff zu druckenden Rasterpunkt zumindest in seiner Größe und Lage spezifizieren. Diese Spezifikation der Rasterpunkte vergrößert die Datei der mit der zu druckenden Seite des Druckerzeugnisses einhergehenden Menge an Bilddaten 02 in nicht unerheblichem Maße. Statt die Spezifikation der Lage und Größe des Rasterpunktes auf die Anordnung des Rasterpunktes auf dem Bedruckstoff zu beziehen, kann sich die Spezifikation des Rasterpunktes auch auf seine Anordnung relativ zu einem am Druckprozess beteiligten Formzylinder 12 des Druckwerks einer Druckmaschine beziehen, d. h. die Spezifikation gibt an, wo der Rasterpunkt z. B. unter Berücksichtigung der Winkellage des Formzylinders 12 hinsichtlich dessen Mantelfläche anzuordnen ist. Damit werden Rasterpunkte mit ihrer jeweiligen Spezifikation einer bestimmten Druckbildstelle in der Druckmaschine zugeordnet.

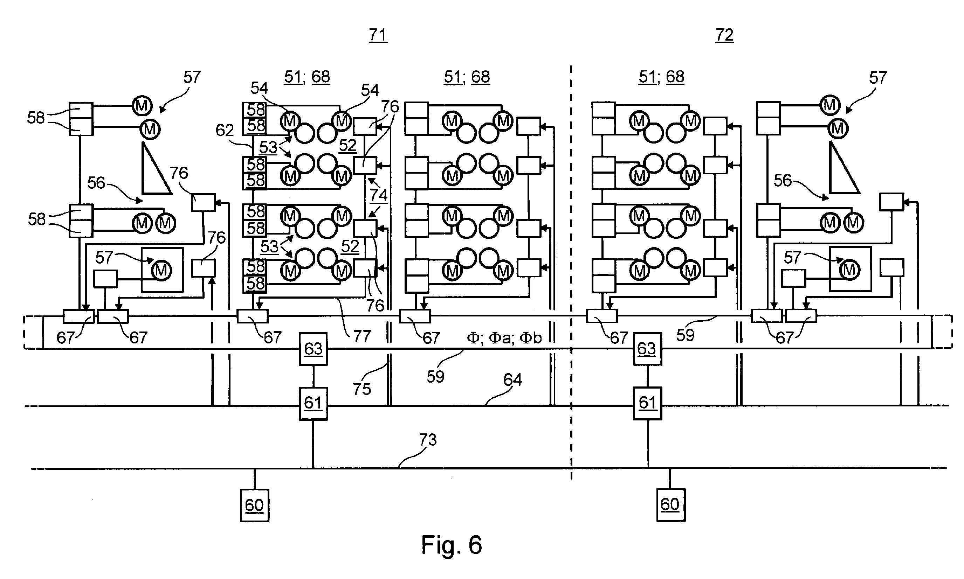

Es ist vorteilhaft, die vom Rasterimageprozessor 03 (RIP) für jede der zu einer herzustellenden Seite gehörenden Farbseparationen erzeugten Rasterdaten 04 vorzugsweise jeweils in einer Datei in einer Speichervorrichtung 06 zu speichern und dort abrufbereit vorzuhalten. In der Speichervorrichtung 06 können die Rasterdaten 04 ganzer Farbseparationen oder eines Teils von mindestens einer Farbseparation zwischengespeichert werden. Die Zwischenspeicherung der Rasterdaten 04 hat den Vorteil, dass ein Abriss des zu übertragenden umfangreichen Datenstromes während des Bebilderungsvorgangs vermieden werden kann. Der Rechner 01 der Druckvorstufe, der Rasterimageprozessor 03 (RIP) und/oder die Speichervorrichtung 06 können vorteilhafterweise jeweils mit einem Netzwerk 07 zur insbesondere elektronischen Kommunikation von in der Druckvorstufe zu verarbeitenden Daten verbunden sein, wobei die mit einer zu druckenden Seite des Druckerzeugnisses einhergehenden Bilddaten 02 z. B. mit dem in diesem Netzwerk 07 eingebundenen Rechner 01 der Druckvorstufe mit mindestens einem in der Bürokommunikation üblichen Programm, z. B. zur Textverarbeitung oder grafischen Bearbeitung, bearbeitbar sind. Gleichfalls ist vorzugsweise ein Rechner 08 zur Steuerung und/oder Überwachung der den Druckprozess ausführenden Druckmaschine an dieses der Druckvorstufe zuzurechnende Netzwerk 07 angeschlossen, wobei der Rechner 08 zur Steuerung und/oder Überwachung der Druckmaschine vorzugsweise auch mit einem Netzwerk 09 zur Steuerung und/oder Überwachung der Druckmaschine verbunden ist, wobei über das Netzwerk 09 zur Steuerung und/oder Überwachung der Druckmaschine alle erforderlichen Maschinenvorgänge koordiniert werden können, wobei zu diesen Maschinenvorgängen z. B. die Steuerung der Antriebe der Druckmaschine und damit der Winkellage der Formzylinder 12, eine An- oder Abstellung der Formzylinder 12 an mit den jeweiligen Formzylindern 12 zusammenwirkenden Übertragungszylinder, eine Steuerung der Formzylinder 12 relativ zu einer den Bedruckstoff schneidenden und/oder falzenden Einrichtung oder eine Steuerung einer im Druckprozess den Transport des Bedruckstoffes beeinflussenden Einrichtung gehören können. Das Netzwerk 09 zur Steuerung und/oder Überwachung der Druckmaschine wird später in Verbindung mit der Fig. 6 näher erläutert.

Der Rechner 08 zur Steuerung und/oder Überwachung der Druckmaschine ist z. B. als ein zur Druckmaschine gehörender Leitstand 08 ausgebildet oder zumindest in einem zur Druckmaschine gehörenden Leitstand 08 integriert (Fig. 1 bis 5). Durch die datentechnische Anbindung des Rechners 08 zur Steuerung und/oder Überwachung der Druckmaschine an den Rechner 01 der Druckvorstufe, den Rasterimageprozessor 03 (RIP) und/oder die Speichervorrichtung 06 kann den für jede der zu einer herzustellenden Seite gehörenden Farbseparationen erzeugten Rasterdaten 04 eine mit einem Druckort korrespondierende Druckbildstelle innerhalb der Druckmaschine zugeordnet werden, denn der Rechner 08 zur Steuerung und/oder Überwachung der Druckmaschine verfügt über Daten z. B. zur Belegung der zur Druckmaschine gehörenden Formzylinder 12 mit jeweils mindestens einer Druckform, wobei die Druckform mindestens eine Druckbildstelle mit einem an dieser Druckbildstelle auszubildenden Druckbild aufweist, sowie über den Druckprozess, wobei die den Druckprozess betreffenden Daten eine Information insbesondere hinsichtlich der Reihenfolge der zu einer herzustellenden Seite gehörenden Farbseparationen in Bezug auf die Transportrichtung des Bedruckstoffes durch die Druckmaschine beinhalten. Die Daten zur Belegung der zur Druckmaschine gehörenden Formzylinder 12 mit jeweils mindestens einer Druckform sind z. B. in einem elektronisch vorgehaltenen Belegungsplan enthalten.

Zumeist räumlich getrennt von einem der Druckvorstufe zuzurechnenden Bereich, in welchem zumindest der Rechner 01 der Druckvorstufe angeordnet ist, befindet sich ein dem eigentlichen Druckprozess zuzuordnender Bereich, der insbesondere als ein Maschinensaal ausgebildet ist, in welchem zumindest eine den Druckprozess ausführende Druckmaschine aufgestellt ist. Die Druckmaschine ist vorzugsweise als eine in Transportrichtung des Bedruckstoffes nacheinander zu einer herzustellenden Seite gehörende Druckbilder in mehreren, z. B. in mindestens vier verschiedenen Druckfarben druckende Druckmaschine ausgebildet. Die Druckmaschine ist z. B. als eine Bogenrotationsdruckmaschine oder als eine Rollenrotationsdruckmaschine ausgebildet.

In der bevorzugten Ausführung ist die Druckmaschine als eine Offset-Rollenrotationsdruckmaschine ausgebildet, insbesondere als eine Zeitungsdruckmaschine, bei der vorzugsweise jeder herzustellenden Seite des Druckerzeugnisses jeweils eine Druckform zugeordnet ist, wobei das Druckwerk dieser Druckmaschine in einem konventionellen Nassoffsetdruckverfahren oder in einem feuchtmittellos arbeitenden Trockenoffsetdruckverfahren Druckbilder auf den durch diese Druckmaschine beförderten Bedruckstoff druckt, wobei der Bedruckstoff als eine Materialbahn, z. B. als eine Papierbahn, ausgebildet ist. Die Druckmaschine bedruckt die Materialbahn während ihres Durchlaufs durch die Druckmaschine vorzugsweise gleichzeitig beidseitig, wobei mit den einzelnen Farbseparationen einer herzustellenden Seite korrespondierende Druckbilder jeweils in Transportrichtung der Materialbahn nacheinander gedruckt werden.

Alternativ kann die Druckmaschine z. B. auch als eine in einem Tiefdruckverfahren druckende Druckmaschine ausgebildet sein, wobei zur Herstellung von Druckprodukten unterschiedlicher Größe, insbesondere unterschiedlicher Länge, Formzylinder 12 mit unterschiedlichen Durchmessern in der Druckmaschine gegeneinander austauschbar sind. Je nach verwendetem Formzylinder 12 sind dann weitere am Druckprozess beteiligte Einrichtungen an die durch den jeweiligen Umfang des Formzylinders 12 bestimmte Produktlänge anzupassen, z. B. ist ein Schneidzylinder oder ein Falzzylinder in einem dem Druckwerk nachgeordneten Falzapparat in seiner jeweiligen Winkellage relativ zu der Winkellage des Formzylinders 12 entsprechend zu verstellen. In diesem Fall ist auch eine die Bebilderung des Formzylinders 12 ausführende Bebilderungsvorrichtung 13 derart zu gestalten, dass mit ihr zumindest in Umfangsrichtung des Formzylinders 12 eine längenvariable Bebilderung ausgeführt werden kann.

Eine weitere alternative Ausbildung der Druckmaschine kann vorsehen, dass der Druckprozess druckformlos, d. h. ohne Verwendung einer gegenständlich ausgebildeten Druckform ausgeführt wird, indem an einer Druckbildstelle auf einem z. B. als Trommel ausgebildeten Bildträger ein mit den zu druckenden Rasterpunkten korrespondierendes latentes, z. B. elektrostatisches Druckbild ausgebildet wird. Eine weitere Ausbildung einer den Druckprozess druckformlos ausführenden Druckmaschine kann darin bestehen, dass die Bebilderungsvorrichtung 13 Druckfarbe von einem z. B. zylinderförmig ausgebildeten Farbträger unter Verwendung des lichthydraulischen Effektes pixelweise auf einen Bedruckstoff übertragt. Somit kann ein direktes oder ein indirektes Druckverfahren zur Anwendung kommen.

Die beispielhaft gewählte Druckmaschine ist in den Fig. 1 bis 5 in sehr vereinfachter Weise dargestellt und zeigt jeweils nur schematisch z. B. zwei zu einem Achterdruckturm gestapelte Druckeinheiten 11, z. B. H-Druckeinheiten 11, wobei jede H-Druckeinheit 11 jeweils eine Brückendruckeinheit und eine U-Druckeinheit aufweist, wobei jede Brückendruckeinheit und jede U-Druckeinheit jeweils aus zwei Zylinderpaare jeweils bestehend aus einem Formzylinder 12 und einem Übertragungszylinder (nicht dargestellt) besteht, wobei die Übertragungszylinder unterschiedlicher, aber zu derselben Brücken- oder U-Druckeinheit gehörender Zylinderpaare gegeneinander angestellt sind, wobei die Materialbahn (nicht dargestellt) jeden Achterdruckturm zwischen den gegeneinander angestellten Übertragungszylindern vertikal durchläuft. Es können aber auch andere, insbesondere im Zeitungsdruck gebräuchliche Druckwerksanordnungen vorgesehen sein, z. B. eine Satellitenanordnung, insbesondere eine 9er-Satellitenanordnung, wobei der zentral angeordnete, den vier Übertragungszylindern gemeinsame Druckzylinder vorzugsweise einen eigenen, vom Antrieb der Übertragungszylinder und/oder jeweils zugehörigen Formzylinder 12 unabhängigen, mit einem anderen Antrieb nicht in formschlüssiger oder mechanischer Verbindung stehenden Antrieb aufweist. In den Fig. 1 bis 5 sind aus Gründen der Übersichtlichkeit nur jeweils die Formzylinder 12 jeder Brücken- oder U-Druckeinheit oder 9er-Satellitenanordnung dargestellt.

Jeder Formzylinder 12 der Druckmaschine weist in der bevorzugten Ausführung in seiner Axialrichtung nebeneinander mehrere, z. B. vier oder sechs Druckbildstellen auf (nicht dargestellt), wobei sich diese Druckbildstellen z. B. auf gegenständlich ausgebildeten, jeweils auf einem der Formzylinder 12 angeordneten Druckformen befinden, und zwar vorzugsweise auf jeder Druckform jeweils genau eine dieser Druckbildstellen, wobei in Umfangsrichtung des Formzylinders 12 jeweils auch mehrere, z. B. zwei Druckbildstellen bzw. Druckformen anordenbar sein können. So ist die Druckmaschine z. B. als eine sogenannte 6/2-Druckmaschine vorzugsweise für den Zeitungsdruck ausgebildet, d. h. mit jeweils sechs Druckbildstellen in Axialrichtung und zwei Druckbildstellen in Umfangsrichtung jedes Formzylinders 12. Zumindest ein Teil der in der Druckmaschine vorgesehenen Druckbildstellen bzw. angeordneten Druckformen kann z. B. durch ein thermisches, ablatives Bebilderungsverfahren beschreibbar, vorzugsweise wiederbeschreibbar ausgebildet sein. Insbesondere können die Druckformen jeweils als prozessfreie oder prozesslose Druckformen ausgebildet sein, die eine chemische oder "nasse" Entwicklung nicht benötigen. An jeder Druckbildstelle ist ein mit einem der Farbauszüge korrespondierendes Druckbild von einer der herzustellenden Seiten ausbildbar, d. h. jede dieser Druckbildstellen weist jeweils ein zu einer der herzustellenden Seiten gehörendes Druckbild auf, d. h. an jeder in der Druckmaschine in Abhängigkeit von dem in dieser Druckmaschine herzustellenden Druckprodukt ausgewählten Druckbildstelle wird mittels mindestens einer Bebilderungsvorrichtung 13 ein mit den zu druckenden Rasterpunkten korrespondierendes Druckbild ausgebildet. Vorzugsweise sind alle der in der Druckmaschine vorgesehenen Druckbildstellen bzw. angeordneten Druckformen inline, d. h. innerhalb der Druckmaschine bebilderbar, d. h. mit mindestens einer innerhalb der Druckmaschine angeordneten Bebilderungsvorrichtung 13 mit ihrem jeweiligen Druckbild versehbar.

Vorzugsweise sind jedem Formzylinder 12 so viele Bebilderungsvorrichtungen 13 zugeordnet, wie dieser Formzylinder 12 in seiner axialen Richtung nebeneinander Druckbildstellen aufweist. Insbesondere im Zeitungsdruck bildet jede Bebilderungsvorrichtung 13 auf einer auf einem Formzylinder 12 angeordneten Druckform ein Druckbild vorzugsweise jeweils an genau einer zu dieser Druckform gehörenden Druckbildstelle aus. Mindestens einer der in der Druckmaschine angeordneten Formzylinder 12 kann in seiner Axialrichtung z. B. mehrere aufeinander folgende, vorzugsweise gleich breite Abschnitte aufweisen, wobei in jedem Abschnitt auf dem Formzylinder 12 mindestens eine Druckform anordenbar bzw. mindestens eine Druckbildstelle vorgesehen ist. Auch kann vorgesehen sein, dass in jedem Abschnitt des Formzylinders 12 in dessen Umfangsrichtung mehrere Druckbildstellen bebilderbar bzw. Druckformen anordenbar sind. In jedem Abschnitt des Formzylinders 12 werden in dessen Umfangsrichtung vorzugsweise zwei Druckbildstellen bebildert bzw. sind zwei Druckformen angeordnet. Verschiedenen Abschnitten desselben Formzylinders 12 ist vorzugsweise jeweils eine Bebilderungsvorrichtung 13 zugeordnet, insbesondere kann auch jedem Abschnitt des Formzylinders 12 eine eigene Bebilderungsvorrichtung 13 zugeordnet sein. Alternativ kann auch vorgesehen sein, dass dieselbe Bebilderungsvorrichtung 13 alle Druckbildstellen bzw. Druckformen desselben Formzylinders 12 in einem sequentiellen oder parallelen Arbeitsablauf bebildert. Wenn die Druckmaschine mindestens zwei Formzylinder 12 mit jeweils mindestens einer von einer der Bebilderungsvorrichtungen 13 bebilderbaren Druckbildstelle bzw. Druckform aufweist, ist es vorteilhaft vorzusehen, dass die einem dieser Formzylinder 12 zugeordnete Bebilderungsvorrichtung 13 die mindestens eine Druckbildstelle bzw. Druckform bebildert, während der andere Formzylinder 12 mit seiner mindestens einen Druckbildstelle bzw. Druckform an einem von der Druckmaschine ausgeführten, laufenden Druckprozess beteiligt ist.

Die Bebilderungsvorrichtung 13 ist ein physikalisches, ein Druckbild erzeugendes Interface und kann jeweils z. B. ein einzelnes Lasersystem oder ein aus mehreren Lasern bestehendes Laserarray oder ein anderes an der Druckbildstelle bzw. auf der Druckform ein Druckbild erzeugendes System aufweisen, wobei das an der Druckbildstelle bzw. auf der Druckform erzeugte Druckbild indirekt z. B. durch ein Offsetdruckverfahren oder ein Tiefdruckverfahren auf den Bedruckstoff übertragen wird. Die Bebilderungsvorrichtung 13 kann aber auch z. B. als ein Inkjet-System ausgebildet sein, sodass das Druckbild ohne ein übertragendes Medium, z. B. einen Übertragungszylinder, direkt und unmittelbar auf dem Bedruckstoff erzeugt wird.

Jede Bebilderungsvorrichtung 13 weist auch eine die Bebilderungsvorrichtung 13 steuernde Steuervorrichtung 14 auf, wobei diese Steuervorrichtung 14 gleichfalls in der Druckmaschine angeordnet und vorzugsweise in der Baueinheit der Bebilderungsvorrichtung 13 integriert ist. Alternativ können die Bebilderungsvorrichtung 13 und ihre Steuervorrichtung 14 auch als räumlich und funktional eng miteinander verbundene Module ausgebildet sein. Die Bebilderungsvorrichtung 13 und ihre Steuervorrichtung 14 sind somit vorzugsweise direkt miteinander gekoppelt, wobei die Bebilderungsvorrichtung 13 die von ihrer Steuervorrichtung 14 vorzugsweise bitweise erhaltene Rasterpunktinformation physikalisch in das auszubildende Druckbild umsetzt. Die Steuervorrichtung 14 jeder Bebilderungsvorrichtung 13 ist jeweils an eine Datenleitung 16 angeschlossen, wobei die Datenleitungen 16 aller z. B. in derselben Brücken-, U- oder H-Druckeinheit 11 oder in demselben Druckturm angeordneten Steuervorrichtungen 14 von in der Druckmaschine angeordneten Bebilderungsvorrichtungen 13 gemäß den Fig. 1 und 3 bis 5 z. B. mit mindestens einem die Funktion eines Datenmanagers ausübenden Rechner 17 verbunden sind. Die Datenleitungen 16 können leitungsgebunden z. B. jeweils als ein Glasfaserkabel, als ein Koaxialkabel oder als Twisted-Pair-Kabel oder drahtlos als eine Funkübertragungsstrecke ausgebildet sein. Der als Datenmanager ausgebildete Rechner 17 ist vorzugsweise in räumlicher Nähe zum Druckturm und seinen Druckeinheiten 11 angeordnet, sodass der Druckturm oder zumindest seine Druckeinheiten 11 jeweils zusammen mit den ihren Formzylindern 12 zugeordneten Bebilderungsvorrichtungen 13, deren Steuervorrichtungen 14 und dem als Datenmanager ausgebildeten Rechner 17 eine in den Fig. 1, 3 bis 5 jeweils durch eine punktierte Umrandung angedeutete Maschineneinheit 18 bilden. Der die Funktion eines Datenmanagers ausübende Rechner 17 kann z. B. in einem FPGA (Field Programmable Gate Array) oder als ein ASIC (Application Specific Integrated Circuit) realisiert und damit als ein auf die Funktion der Datenzuordnung spezialisierter Schaltkreis (Daten-Switch) ausgeführt sein.

Vorzugsweise als Bestandteil der Maschineneinheit 18 kann eine z. B. jeweils einer H-Druckeinheit 11 zugeordnete Logikeinheit 21 vorgesehen sein, die einerseits mit den in der betreffenden H-Druckeinheit 11 angeordneten Steuervorrichtungen 14 und andererseits mit dem Netzwerk 09 zur Steuerung und/oder Überwachung der Druckmaschine verbunden ist, wobei die Logikeinheit 21 jeweils für eine korrekte Ablaufsteuerung innerhalb jeder H-Druckeinheit 11 sorgt. Gleichfalls vorzugsweise als Bestandteil der Maschineneinheit 18 ist eine Antriebssteuervorrichtung 22 vorgesehen, die den Antrieb und damit die Rotation der in jeder Druckeinheit 11 angeordneten Formzylinder 12 und Übertragungszylinder steuert und gegebenenfalls auch überwacht. Die Antriebssteuervorrichtung 22 kann ein mit einer Winkellage von einem der Formzylinder 12 korrespondierendes Signal an die Steuervorrichtung 14 der diesen Formzylinder 12 bebildernde Bebilderungsvorrichtung 13 leiten, um z. B. eine in Umfangsrichtung des die zu bebildernde Druckform tragenden Formzylinders 12 gerichtete Bebilderungsgeschwindigkeit der Bebilderungsvorrichtung 13 mit einer Rotationsgeschwindigkeit dieses Formzylinders 12 zu koppeln, sodass die Rotationsgeschwindigkeit des Formzylinders 12 an die Bebilderungsgeschwindigkeit der Bebilderungsvorrichtung 13 angepasst ist, wobei das mit der Winkellage eines Formzylinders 12 korrespondierende Signal z. B. mit einem vorzugsweise hochauflösenden Encoder oder einer anderen die Rotation des Formzylinders 12 erfassenden Einrichtung (nicht dargestellt) gewonnen wird. Das an die Steuervorrichtung 14 der einem der Formzylinder 12 zugeordneten Bebilderungsvorrichtung 13 zu leitende Signal kann z. B. über das Netzwerk 09 zur Steuerung und/oder Überwachung der Druckmaschine übertragen und von der jeweils einer H-Druckeinheit 11 zugeordneten Logikeinheit 21 empfangen und von dort an die betreffende Steuervorrichtung 14 zur Koordinierung des Bebilderungsvorgangs in Abhängigkeit von anderen Vorgängen in der Druckeinheit 11 weitergeleitet werden, wobei die anderen den Bebilderungsvorgang beeinflussenden Vorgänge z. B. die Führung des Bedruckstoffes während seines Transportes durch die Druckmaschine, eine Betriebsstellung des zu bebildernden Formzylinders 12 hinsichtlich seiner Anstellung an oder Abstellung von einem mit diesem Formzylinder 12 zusammenwirkenden Übertragungszylinder, einen Schneidzylinder oder einen Falzzylinder in einem der Druckeinheit 11 nachgeordneten Falzapparat, einen Querfalz, einen Längsfalz, einen dritten Falz oder einen Cutter betreffen können. Alle vorstehend beispielhaft genannten, den Bedruckstoff bedruckenden oder verarbeitenden Einrichtungen haben eine Auswirkung auf die Anordnung der durch den Bebilderungsvorgang z. B. auf einer Druckform oder direkt auf dem Formzylinder 12 zu bildernden Druckbildstelle. Alternativ oder zusätzlich kann der die Rotation des Formzylinders 12 erfassende Encoder sein Ausgangssignal auch direkt an die Steuervorrichtung 14 der diesen Formzylinder 12 bebildernde Bebilderungsvorrichtung 13 leiten, um eine in Umfangsrichtung dieses Formzylinders 12 gerichtete Bebilderungsgeschwindigkeit der Bebilderungsvorrichtung 13 mit einer Rotationsgeschwindigkeit dieses Formzylinders 12 zu koppeln, sodass die Rotationsgeschwindigkeit des Formzylinders 12 an die Bebilderungsgeschwindigkeit der Bebilderungsvorrichtung 13 angepasst ist. Diese Direktzuleitung des Ausgangssignals des Encoders an die Steuervorrichtung 14 der Bebilderungsvorrichtung 13 hat den Vorteil, dass das Ausgangssignal des Encoders der Steuervorrichtung 14 über einen kurzen Weg praktisch verzögerungsfrei bereitgestellt wird, weil eine Durchschleifung durch die Antriebssteuervorrichtung 22 entfällt.

Jede Maschineneinheit 18 kann vorzugsweise mit mindestens einer weiteren Maschineneinheit 18 eine Sektion der Druckmaschine bilden, wobei jeder Sektion eine Sektionssteuervorrichtung 23 zugeordnet sein kann, wobei jede Sektionssteuervorrichtung 23 z. B. die Zuordnung der jeweiligen zu bebildernden Druckbildstellen sowie übergeordnete Betriebsarten der Maschineneinheit 18 steuert oder regelt. Jeder Formzylinder 12 und/oder Übertragungszylinder der Druckmaschine, der Maschineneinheit 18 oder zumindest der Druckeinheit 11 weist vorzugsweise jeweils einen eigenen, zumindest zu anderen Formzylindern 12 oder Übertragungszylindern der Druckmaschine, dieser Maschineneinheit 18 oder zumindest dieser Druckeinheit 11 nicht in formschlüssiger oder mechanischer Antriebsverbindung stehenden Antrieb auf, z. B. einen winkellagegeregelten Elektromotor, sodass jeder dieser Formzylinder 12 oder Übertragungszylinder unabhängig von den anderen Formzylindern 12 oder Übertragungszylindern der Druckmaschine, dieser Maschineneinheit 18 oder zumindest dieser Druckeinheit 11 rotierbar ist. Es ist vorteilhafterweise ein Betriebszustand der Druckmaschine, der Maschineneinheit 18 oder zumindest der Druckeinheit 11 vorgesehen, in welchem einer der Formzylinder 12 von einer ihm zugeordneten Bebilderungsvorrichtung 13 bebildert wird, während ein anderer Formzylinder 12 der Druckmaschine, dieser Maschineneinheit 18 oder zumindest dieser Druckeinheit 11 gleichzeitig druckt oder Druckfarbe überträgt. Des Weiteren kann vorgesehen sein, dass die Druckbildstellen aller Formzylinder 12 derselben Maschineneinheit 18 oder zumindest derselben Druckeinheit 11 der Druckmaschine gleichzeitig bebildert werden, während die Druckbildstellen der Formzylinder 12 einer anderen Maschineneinheit 18 oder zumindest einer anderen Druckeinheit 11 dieser Druckmaschine zu demselben Zeitpunkt drucken oder Druckfarbe übertragen.

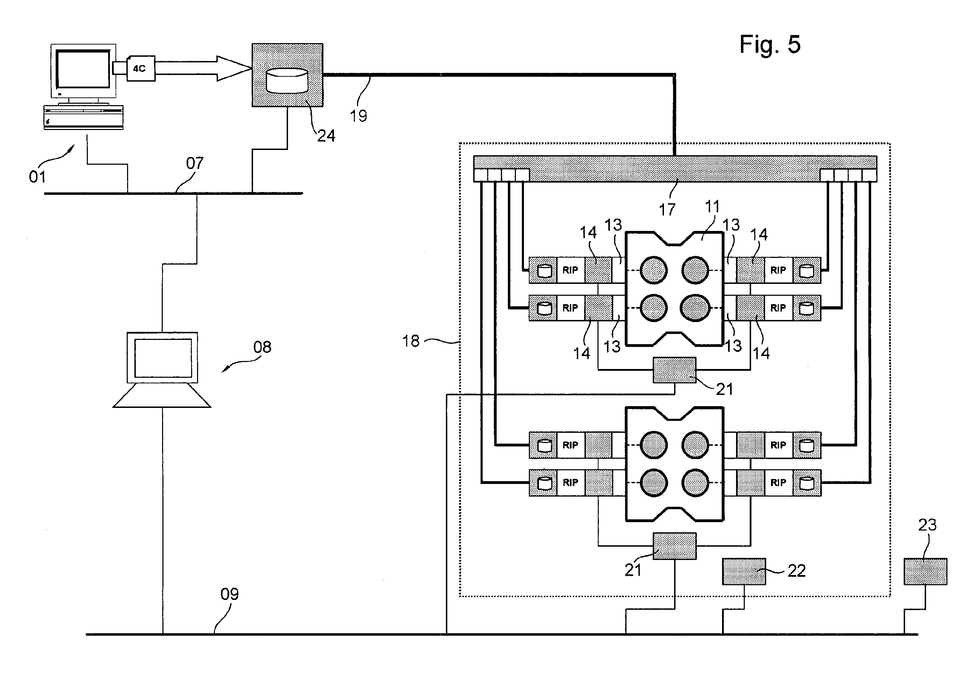

Der als Datenmanager ausgebildete, vorzugsweise in oder an einer Maschineneinheit 18 angeordnete Rechner 17 ist seinerseits an ein Netzwerk 19 zur vorzugsweise elektronischen Kommunikation zumindest von Bilddaten 02, gemäß den in den Fig. 1 bis 3 dargestellten Beispielen auch zur Kommunikation von Bilddaten 02 und/oder Rasterdaten 04, angeschlossen, wobei die zu einer zu druckenden Seite gehörenden Bilddaten 02 und/oder die zumindest zu einem der Farbauszüge einer zu druckenden Seite gehörenden Rasterdaten 04 vorzugsweise jeweils in einer entsprechenden Datei zusammengefasst sind, wobei z. B. zumindest der Rechner 01 der Druckvorstufe (Fig. 5) und/oder die Speichervorrichtung 06 (Fig. 1 bis 3) gleichfalls an das Netzwerk 19 zur Kommunikation zumindest von Bilddaten 02 angeschlossen sind.

Das Netzwerk 07 zur vorzugsweise elektronischen Kommunikation von in der Druckvorstufe zu verarbeitenden Daten, das Netzwerk 09 zur Steuerung und/oder Überwachung der Druckmaschine und/oder das Netzwerk 19 zur elektronischen Kommunikation von Bilddaten 02 und/oder Rasterdaten 04 können physikalisch leitungsgebunden, z. B. jeweils als ein Glasfaserkabel, als ein Koaxialkabel oder als Twisted-Pair-Kabel, oder drahtlos als eine Funkübertragungsstrecke ausgebildet sein. Die Netzwerke 07; 09; 19 können jeweils z. B. in einer unter der Bezeichnung Ethernet bekannten Vernetzungstechnologie, auch Industrial Ethernet genannt, ausgebildet sein, z. B. als Fast-Ethernet mit einer Datenübertragungsrate von 100 MB/s, als Gigabit-Ethernet mit einer Datenübertragungsrate von 1.000 MB/s oder als 10 Gigabit-Ethernet mit einer Datenübertragungsrate von 10.000 MB/s, wobei für das Netzwerk 19 zur Kommunikation von Bilddaten 02 und/oder Rasterdaten 04 aufgrund der hohen zu transportierenden Datenmengen vorzugsweise die höheren Datenübertragungsraten gewählt werden. Ethernet ist weitestgehend in der IEEE-Norm 802.3 standardisiert, wobei dieser Norm Einzelheiten zur Ausgestaltung eines Ethernet-basierten Netzwerkes entnehmbar sind. Eine Ausbildung zumindest eines Teiles zumindest einer der Netzwerke 07; 09; 19 mit drahtlosen Übertragungsstrecken basiert z. B. auf der IEEE-Norm 802.11 (Wireless LAN), da ein derartiges Netzwerk das Ethernet-Datenblockformat unterstützt und mit Ethernet zusammenarbeitet. Die Netzwerke 07; 09; 19 sind vorzugsweise jeweils z. B. nach dem TCP/IP-Protokoll organisiert.

In der bevorzugten Ausführung ist vorgesehen, dass zumindest zwei der drei beschriebenen Netzwerke 07; 09; 19, vorzugsweise sogar alle drei beschriebenen Netzwerke 07; 09; 19, zu einem einzigen Netzwerk vereint werden, sodass sämtliche zum Betrieb der Druckmaschine und zur Bebilderung der Druckbildstellen ihrer Formzylinder erforderlichen Daten über ein gemeinsames Netzwerk transportiert werden. Ein Kommunikationssystem, das in einem gemeinsamen Netzwerk alle zur Herstellung eines Druckerzeugnisses erforderlichen Netzwerkfunktionalitäten - beginnend von der Druckvorstufe über die Ausführung des Druckauftrages mit der Druckmaschine bis hin zur Erhebung mit dem Druckauftrag in Verbindung stehender statistischer Daten - in sich vereinigt, hat den nicht unerheblichen wirtschaftlichen Vorteil, dass physikalische Signalleitungen und/oder Übertragungsstrecken gemeinsam genutzt werden können, wodurch der Installationsaufwand zur Ausbildung der erforderlichen Netzwerkfunktionalitäten deutlich verringert wird. Im Übrigen wird in einem bereichsübergreifenden, mindestens eine Druckmaschine einbindenden Kommunikationssystem der Herstellprozess eines Druckerzeugnisses transparenter und für ihn überwachendes Personal steuerbarer.

In den Ausführungsbeispielen gemäß den Fig. 1 bis 3 erzeugt z. B. ein einziger zentraler Rasterimageprozessor 03 (RIP) Rasterdaten 04 für jede der zu einer herzustellenden Seite gehörenden Farbseparationen und speichert diese Rasterdaten 04 vorzugsweise in einer als Datenpuffer dienenden Speichervorrichtung 06. Alternativ kann der Rasterimageprozessor 03 (RIP) die Rasterdaten 04 auch direkt ohne eine Zwischenspeicherung an zumindest einen der als Datenmanager ausgebildeten Rechner 17 weiterleiten, sodass die Rasterdaten 04 synchron zur Bebilderung zu einer der Steuervorrichtungen 14 einer der jeweils einem der Formzylinder 12 zugeordneten Bebilderungsvorrichtungen 13 gelangen. Die Rasterdaten 04 werden somit jeweils über das Netzwerk 19 zur elektronischen Kommunikation von Bilddaten 02 und/oder Rasterdaten 04 an jeden als Datenmanager ausgebildeten Rechner 17 weitergeleitet, von welchem Rechner 17 aus die Rasterdaten 04 an die jeweilige Steuervorrichtung 14 einer der jeweils einem der Formzylinder 12 zugeordneten Bebilderungsvorrichtungen 13 geleitet werden. Die bedarfsgerechte Zuordnung der Rasterdaten 04 zur richtigen Bebilderungsvorrichtung 13 erfolgt z. B. unter Einbeziehung einer Anweisung des Rechners 08 zur Steuerung und/oder Überwachung der Druckmaschine, da dieser Rechner 08 insbesondere durch eine Kommunikation mit dem Rechner 01 in der Druckvorstufe über Daten z. B. zur Belegung der zur Druckmaschine gehörenden Formzylinder 12 mit mindestens einer jeweils mindestens eine Druckbildstelle aufweisenden Druckform sowie über den Druckprozess verfügt, insbesondere hinsichtlich der Reihenfolge der zu einer herzustellenden Seite gehörenden Farbseparationen in Bezug auf die Transportrichtung des Bedruckstoffes durch die Druckmaschine, und diese Belegungsinformation oder Anordnungsinformation in Form eines Signals z. B. an die jeweilige Steuervorrichtung 14 von einer der Bebilderungsvorrichtungen 13 leitet. Das vom Rechner 08 zur Steuerung und/oder Überwachung der Druckmaschine bereitgestellte Signal ist damit ein Steuersignal zur selektiven Zuordnung der Rasterdaten 04 zu einer der Bebilderungsvorrichtungen 13.

In Verbindung mit dem im Rasterimageprozessor 03 (RIP) durchgeführten Rasterungsprozess oder innerhalb der Steuervorrichtungen 14, von denen jeweils eine einer jeden der Bebilderungsvorrichtungen 13 zugeordnet ist, können die Bilddaten 02 und/oder die Rasterdaten 04 an lokale, z. B. die Druckbildstelle bzw. die zu bebildernde Druckform betreffende Geometriebedingungen angepasst. Auch können, falls erforderlich, an den Bilddaten 02 und/oder Rasterdaten 04 Korrekturen vorgenommen werden, wobei z. B. eine Kissen- und/oder Trapezverzeichnung korrigiert und/oder zur Anpassung eine Spreizung und/oder eine Skalierung vorgenommen werden kann. Ebenso kann eine Korrektur des Fan-out-Effektes erfolgen. Diese im Sinne einer Kalibrierung vorgenommene Anpassung und/oder Korrektur der Bilddaten 02 und/oder Rasterdaten 04 kann alternativ oder zusätzlich vorsehen, dass die Steuervorrichtung 14 vom Rasterimageprozessor 03 (RIP) ermittelte Rasterpunkte in Abhängigkeit von einer an der Druckbildstelle bzw. auf der zu bebildernden Druckform aufzutragenden Druckfarbe und/oder von einem mit der Druckbildstelle bzw. von der zu bebildernden Druckform zu bedruckenden Bedruckstoff kalibriert und/oder dass die Steuervorrichtung 14 vom Rasterimageprozessor 03 (RIP) ermittelte Rasterpunkte in Abhängigkeit von einem Signal eines in der Druckmaschine angeordneten, den Druckprozess überwachenden Inspektionssystems (nicht dargestellt) kalibriert, wobei das Inspektionssystem insbesondere ein auf den mit dem Druckbild bedruckten Bedruckstoff gerichtetes Kamerasystem und ein Bildauswertesystem aufweist.

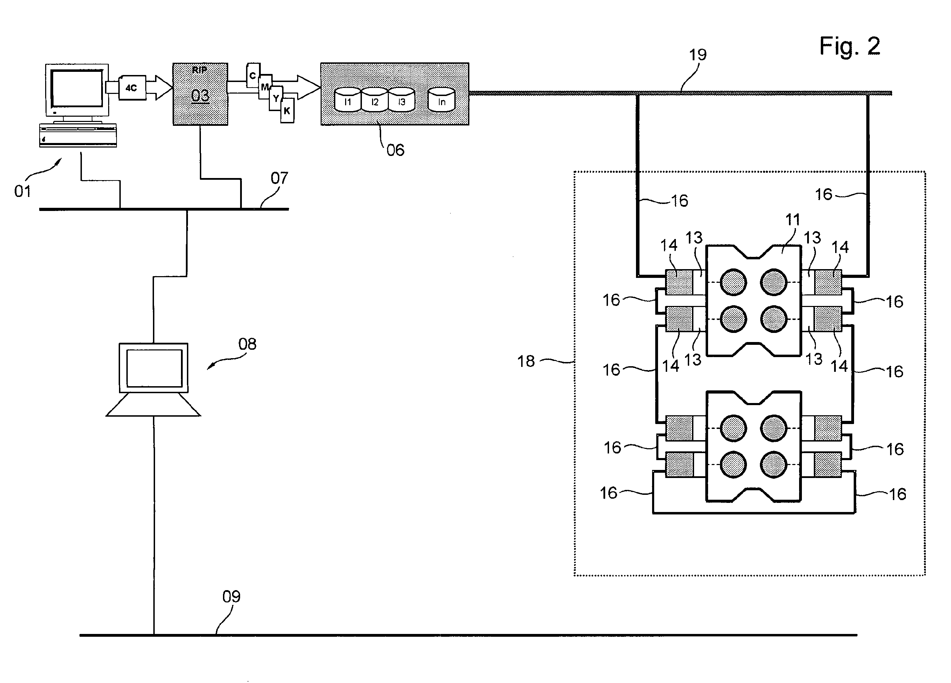

In dem in der Fig. 2 gezeigten Ausführungsbeispiel, das sich auf dieselbe Art von Druckmaschine mit denselben Steuerungsfunktionen bezieht, wie die in Verbindung mit der Fig. 1 beschriebenen, ist im Unterschied zu dem in der Fig. 1 dargestellten Ausführungsbeispiel für das Netzwerk 19 zur Kommunikation von Bilddaten 02 und/oder Rasterdaten 04 eine Linien- oder Ringtopologie verwirklicht, wobei zur Anbindung der Steuervorrichtungen 14, die jeweils einer der Bebilderungsvorrichtungen 13 zugeordnet sind, eine einfache Redundanz zur Erhöhung der Ausfallsicherheit vorgesehen ist. Bei diesem in der Fig. 2 gezeigten Ausführungsbeispiel, bei dem auf einen die Funktion eines Datenmanagers ausübenden Rechner 17 verzichtet wird, sodass z. B. von der Druckvorstufe versandte Dateien oder Telegramme mit Bilddaten 02 und/oder Rasterdaten 04 direkt und unmittelbar an die jeweilige Steuervorrichtung 14 der Bebilderungsvorrichtungen 13 herangeführt werden, ist die kompakte Verlegung der Datenleitungen 16 vorteilhaft, jedoch wird dieser Vorteil durch eine Aufteilung der übertragbaren Bandbreite erkauft.

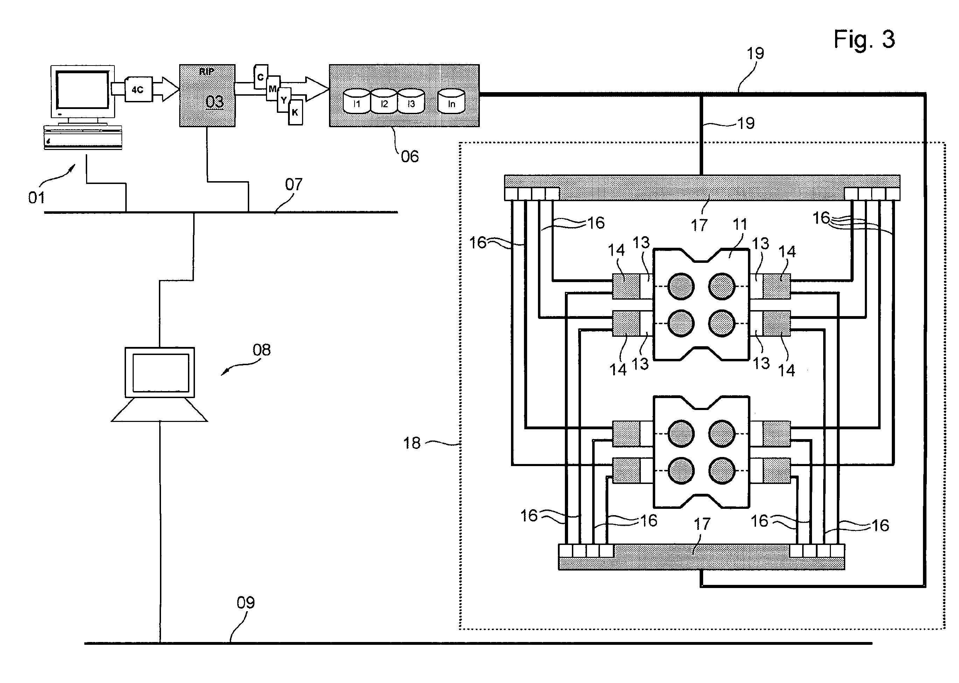

In dem in der Fig. 3 gezeigten Ausführungsbeispiel, das sich auf dieselbe Art von Druckmaschine mit derselben Maschineneinheit 18 und/oder denselben Steuerungsfunktionen beziehen kann, wie die in Verbindung mit der Fig. 1 beschriebenen, ist im Unterschied zu dem in der Fig. 1 dargestellten Ausführungsbeispiel für das Netzwerk 19 zur Kommunikation von Bilddaten 02 und/oder Rasterdaten 04 eine Doppelsterntopologie verwirklicht, was bedeutet, dass alle Steuervorrichtungen 14, die jeweils einer der Bebilderungsvorrichtungen 13 zugeordnet sind, jeweils vorzugsweise sowohl an einen ersten die Funktion eines Datenmanagers ausübenden Rechner 17 als auch an einen weiteren, insbesondere zweiten die Funktion eines Datenmanagers ausübenden Rechner 17 angeschlossen sind, wobei der erste und der z. B. zweite jeweils die Funktion eines Datenmanagers ausübenden Rechner 17 jeweils mit dem Netzwerk 19 zur elektronischen Kommunikation von Bilddaten 02 und/oder Rasterdaten 04 verbunden sind. Die Doppelsterntopologie ist jedoch auch ohne Verwendung von jeweils die Funktion eines Datenmanagers ausübenden Rechnern 17 realisierbar. Durch die mehrfache, z. B. zweifache Anbindung der Steuervorrichtungen 14, die jeweils einer der Bebilderungsvorrichtungen 13 zugeordnet sind, an das Netzwerk 19 zur Kommunikation von Bilddaten 02 und/oder Rasterdaten 04 wird gleichfalls die Ausfallsicherheit erhöht, weil jede dieser Steuervorrichtungen 14 vorzugsweise jeweils mit zwei jeweils die Funktion eines Datenmanagers ausübenden Rechnern 17 in Verbindung steht. Darüber hinaus ergibt sich der besondere Vorteil, dass durch eine Mehrfachanbindung der Steuervorrichtungen 14 an das Netzwerk 19 zur Kommunikation von Bilddaten 02 und/oder Rasterdaten 04 die zur Verfügung stehende Bandbreite der an die Steuervorrichtungen 14 zu übertragenden Bilddaten 02 und/oder Rasterdaten 04 vergrößert wird. So kann bei einer z. B. zweifachen Anbindung der Steuervorrichtungen 14 an das Netzwerk 19 zur elektronischen Kommunikation von Bilddaten 02 und/oder Rasterdaten 04 die Bandbreite für diese zu übertragenden Bilddaten 02 und/oder Rasterdaten 04 verdoppelt werden. Bei einer n-fachen Anbindung kann diese Bandbreite entsprechend vervielfacht werden, wobei n eine ganze natürliche Zahl ist. Die vom Netzwerk 19 zur Kommunikation von Bilddaten 02 und/oder Rasterdaten 04 vorzugsweise mittels der jeweils die Funktion eines Datenmanagers ausübenden Rechner 17 abgegriffenen und/oder verteilten Bilddaten 02 und/oder Rasterdaten 04 können mit einem synchronen oder vorzugsweise einem asynchronen Protokoll den jeweils zuständigen Steuervorrichtungen 14 zugeordnet werden. Für eine bestimmte Steuervorrichtung 14 vorgesehene Bilddaten 02 und/oder Rasterdaten 04 werden aus den dort zu unterschiedlichen Zeitpunkten und/oder über unterschiedliche Übertragungswege eingehenden Datenpaketen zusammengesetzt, falls diese Bilddaten 02 und/oder Rasterdaten 04 der Steuervorrichtung 14 nicht zusammenhängend zugeleitet wurden.

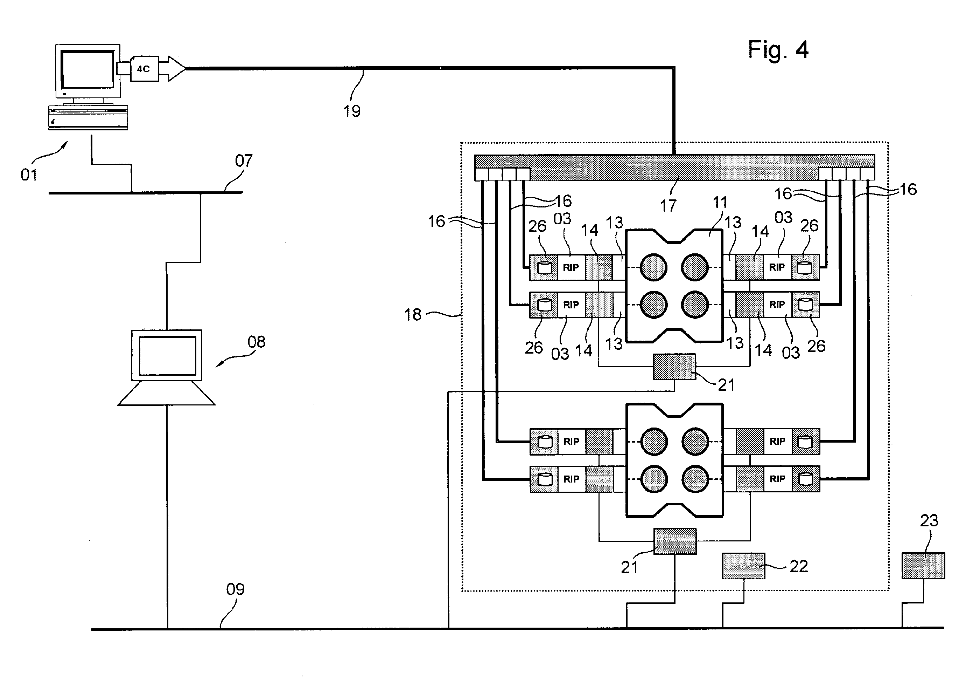

In dem in der Fig. 4 gezeigten Ausführungsbeispiel, das sich auf dieselbe Art von Druckmaschine mit denselben Steuerungsfunktionen bezieht, wie die in Verbindung mit der Fig. 1 beschriebenen, werden in dem Rechner 01 der Druckvorstufe Bilddaten 02 jeweils zu einer vorzugsweise in mehreren, z. B. in vier verschiedenen Druckfarben zu druckenden Seite zusammengefasst und in Form einer Datei oder eines Telegramms über das Netzwerk 19 zur Kommunikation zumindest von Bilddaten 02 z. B. an mindestens einen die Funktion eines Datenmanagers ausübenden Rechner 17 geleitet. Das Netzwerk 19 zur elektronischen Kommunikation zumindest von Bilddaten 02 transportiert demnach Dateien mit der vollständigen Information über die vorzugsweise im Vierfarbendruck herzustellenden Seiten eines Druckerzeugnisses, wobei diese Dateien z. B. auch ein TIFF-Format oder JPEG-Format aufweisen können. Jede dieser aus der Druckvorstufe versandten Dateien oder Telegramme können jeweils auch ohne Verwendung eines die Funktion eines Datenmanagers ausübenden Rechners 17 direkt an die jeweilige Steuervorrichtung 14 der Bebilderungsvorrichtungen 13 gesendet werden.

In dem in der Fig. 4 dargestellten Ausführungsbeispiel leitet der die Funktion eines Datenmanagers ausübende Rechner 17 jede über das Netzwerk 19 zur elektronischen Kommunikation zumindest von Bilddaten 02 transportierte Datei mit der vollständigen Information über eine herzustellende Seite derjenigen Steuervorrichtung 14 samt Bebilderungsvorrichtung 13 zu, die in Abhängigkeit von einer vom Rechner 08 zur Steuerung und/oder Überwachung der Druckmaschine bereitgestellten Belegungsinformation oder Anordnungsinformation die Bebilderung der Druckbildstelle für den anschließenden Druck des Druckbildes ausführen wird. Die zu den Seiten gehörenden Bilddaten 02 werden demnach von dem die Funktion eines Datenmanagers ausübenden Rechner 17 anhand der mindestens eine Druckbildstelle betreffenden Anordnungsinformation oder anhand der mindestens eine Druckform betreffenden Belegungsinformation an die innerhalb der Druckmaschine mit Bezug auf den Bedruckstoff zuständige Druckbildstelle gesandt. Dabei kann die von dem die Funktion eines Datenmanagers ausübenden Rechner 17 vorgenommene Zuweisung diverse auf die Verarbeitung des Bedruckstoffes wirkende oder aus der beabsichtigten Verarbeitung des Bedruckstoffes resultierende Einflüsse berücksichtigen, z. B. Einflüsse von Transporteinrichtungen auf den Bedruckstoff wie auch z. B. die Anzahl der Bahnstränge des Bedruckstoffes, Einflüsse durch den Falzapparat oder auch die Anzahl der Seiten des herzustellenden Druckerzeugnisses. Die Zuordnung jeder über das Netzwerk 19 zur Kommunikation zumindest von Bilddaten 02 transportierten Datei, die eine vollständige Information über eine der herzustellenden Seiten des Druckerzeugnisses enthält, zu der jeweiligen Steuervorrichtung 14 von einer der Bebilderungsvorrichtungen 13 erfolgt z. B. entweder anhand von Daten, die der über das Netzwerk 19 zur Kommunikation zumindest von Bilddaten 02 transportierten Datei bereits von dem Rechner 01 der Druckvorstufe hinzugefügt wurden, oder diese eine Zuweisung der Seiten zu den einzelnen Druckbildstellen vornehmenden Daten werden z. B. in dem die Funktion eines Datenmanagers ausübenden Rechner 17 oder in der jeweiligen Steuervorrichtung 14 von einer der Bebilderungsvorrichtungen 13 mit den jeweils dort eingehenden, über das Netzwerk 19 zur Kommunikation zumindest von Bilddaten 02 transportierten Dateien verknüpft. Somit steuern die vom Rechner 01 der Druckvorstufe bereitgestellten Daten mit der Anordnungsinformation oder der Belegungsinformation entweder direkt oder über den Rechner 08 zur Steuerung und/oder Überwachung der Druckmaschine den die Funktion eines Datenmanagers ausübenden Rechner 17 oder die Steuervorrichtung 14 von einer der Bebilderungsvorrichtungen 13 im Sinne einer selektiven Weiterbehandlung derjenigen Datei, die eine vollständige Information über eine der herzustellenden Seiten des Druckerzeugnisses enthält.

Beispielsweise gelangt eine hinsichtlich einer Druckbildstelle adressierte Datei mit der vollständigen Information über eine herzustellende Seite von dem die Funktion eines Datenmanagers ausübenden Rechner 17 über Datenleitungen 16 zunächst an eine jeweils mit einer Steuervorrichtung 14 einer Bebilderungsvorrichtung 13 in Verbindung stehende, zumindest als Datenschnittstelle ausgebildete Schnittstelle 26, wobei die Schnittstelle 26 vorzugsweise über einen Speicher, insbesondere einen erschütterungsresistenten Speicher, z. B. einen Halbleiterspeicher, verfügt, in welchem zumindest eine an der Schnittstelle 26 bereitgestellte Datei mit der vollständigen Information über eine herzustellende Seite zwischengespeichert wird. Die Schnittstelle 26 kann gleichzeitig auch als eine Hardwareschnittstelle ausgebildet sein, die mit mindestens einer der Datenleitungen 16 physikalisch verbunden ist. Von der Schnittstelle 26 wird jede dort empfangene Datei mit der vollständigen Information über eine herzustellende Seite gegebenenfalls nach einer Zwischenspeicherung einem mit der zur Schnittstelle 26 gehörenden Steuervorrichtung 14 einer Bebilderungsvorrichtung 13 in Verbindung stehenden dezentralen Rasterimageprozessor 03 (RIP) zugeführt, der aus den in der Datei enthaltenen Bilddaten 02 den für die betreffende Druckbildstelle relevanten Farbauszug separiert und rastert, wonach die Bebilderungsvorrichtung 13 anhand der zuvor im dezentralen Rasterimageprozessor 03 (RIP) generierten Rasterdaten 04 die auf dem Formzylinder 12 angeordnete Druckform bzw. die Druckbildstelle auf dem Formzylinder 12 mit einem Druckbild bebildert.

Es ist vorteilhaft, die von einem dezentralen Rasterimageprozessor 03 (RIP) generierten Rasterdaten 04 z. B. in dem mit der jeweiligen Schnittstelle 26 in Verbindung stehenden Speicher zwischenzuspeichern, um den Rasterungsprozess vom Bebilderungsprozess zu entkoppeln. Dieser Speicher kann einen für die Bebilderung benötigten Datenstrom aber auch nur puffern, d. h. in den Speicher eingehende Daten werden dort während eines laufenden Bebilderungsprozesses nur kurzzeitig aufgenommen und sogleich wieder bedarfsgerecht an die nächste, diese Daten benötigende Vorrichtung weitergegeben.

Die in Verbindung mit jeder Druckbildstelle vorgehaltenen dezentralen Rasterimageprozessoren 03 (RIP) sind z. B. in einem FPGA (Field Programmable Gate Array) realisiert, d. h. fest implementiert. Alternativ können die dezentralen Rasterimageprozessoren 03 (RIP), ebenso wie die Schnittstelle 26 und/oder die Steuervorrichtung 14, auch softwaretechnisch, d. h. in Form eines die entsprechenden Funktionen ausführenden Programms, ausgebildet sein und auf einem geeigneten Rechner ausgeführt werden. Da jeder dezentrale Rasterimageprozessor 03 (RIP) nur für einen einzigen der z. B. vier Farbauszüge den Rasterungsprozess ausführen muss, kann die Leistungsfähigkeit dieses dezentralen Rasterimageprozessors 03 (RIP) im Vergleich zu einem in der Druckvorstufe zentral vorgehaltenen Rasterimageprozessor 03 (RIP) geringer ausgelegt sein.

Das in Verbindung mit der Fig. 4 beschriebene Konzept der lokalen Bilddatenverarbeitung hat den Vorteil, dass die Maschineneinheit 18 mit ihren Druckeinheiten 11 und ihren diversen Steuervorrichtungen eine autarke Einheit bildet, die von der Druckvorstufe empfangene Bilddaten 02 einer herzustellenden Seite selbständig verarbeiten und auswerten kann. Der Bereich der Druckvorstufe und der dem eigentlichen Druckprozess zuzuordnende Bereich, der insbesondere als ein Maschinensaal ausgebildet ist, können räumlich weit voneinander getrennt sein. Das Netzwerk 19 zur Kommunikation zumindest von Bilddaten 02 kann auch ein öffentliches, z. B. weltweit operierendes Netzwerk sein, z. B. das Internet oder ein anderes zur Kommunikation elektronischer Daten geeignetes Netzwerk, über welches Netzwerk die Dateien mit der vollständigen Information über eine herzustellende Seite z. B. verschlüsselt von einem Verlag, der die jeweiligen Seiten eines herzustellenden Druckerzeugnisses mit ihren jeweiligen Bilddaten 02 und/oder Rasterdaten 04 zusammengestellt hat, an eine entfernt gelegene Druckerei gesendet werden. Die Zuordnung der einzelnen Farbauszüge zu bestimmten Druckbildstellen erfolgt dann vorzugsweise erst in der zuständigen Maschineneinheit 18. Es kann auch vorgesehen sein, dass der Rechner 01 der Druckvorstufe oder zumindest die die Funktion eines Datenmanagers ausübenden Rechner 17 jede Datei mit der vollständigen Information über eine herzustellende Seite im "broadcasting"-Prinzip simultan an z. B. alle in der betreffenden Maschineneinheit 18 angeordneten Druckbildstellen leiten, wobei sich jedoch nur diejenige Schnittstelle 26 aus den z. B. über Datenleitungen 16 transportierten Dateien jeweils die für sie richtige, d. h. die für sie bestimmte Bildinformation auswählt, wobei sich die für sie bestimmte Bildinformation dadurch ergibt, welche Bildinformation in Abhängigkeit von der Anordnungsinformation oder Belegungsinformation derjenigen Druckbildstelle zugeordnet ist, mit der diese Schnittstelle 26 korrespondiert. Zumindest an jeder in oder an der Druckmaschine angeordneten Steuervorrichtung 14 von einer der Bebilderungsvorrichtungen 13 können damit z. B. von einem Rechner 01 der Druckvorstufe im Broadcast-Verfahren versandte Daten und/oder Dateien aus dem sie transportierenden Netzwerk 19 insbesondere aufgrund einer Verknüpfung mit einer Zusatzinformation, d. h. z. B. der Anordnungsinformation oder Belegungsinformation, selektiv abgegriffen, d. h. ausgefiltert, und einer weiteren Verarbeitung, insbesondere einer Rasterung in einem Rasterimageprozessor 03 (RIP), zugeführt werden. Es wird somit an der Schnittstelle 26 jedes Rasterimageprozessors 03 jeweils die Datei mit Bilddaten 02 zu allen Druckbildern der Seite des Druckerzeugnisses zur Verfügung stellt, jedoch werden selektiv nur diejenigen Bilddaten 02 aus dieser Datei weiterverarbeitet, die zur Ausbildung des Druckbildes an der jeweiligen Druckbildstelle benötigt werden.

Auch für das in Verbindung mit der Fig. 4 beschriebene Konzept der lokalen Bilddatenverarbeitung sind unterschiedliche, z. B. in Verbindung mit den Fig. 1 bis 3 beschriebene Netzwerktopologien wie z. B. eine Ringtopologie, Sterntopologie oder Doppelsterntopologie möglich. Ein weiterer Vorteil dezentraler Rasterimageprozessor 03 (RIP) ist, dass diese parallel, d. h. gleichzeitig den Rasterungsprozess durchführen können, was im Vergleich zu einem in der Druckvorstufe zentral vorgehaltenen Rasterimageprozessor 03 (RIP) einen Zeitvorteil bedeutet. Der Rasterungsprozess kann somit schneller ausgeführt werden.

Das in der Fig. 5 dargestellte Ausführungsbeispiel baut auf dem in der Fig. 4 dargestellten Ausführungsbeispiel auf. Es ist gleichfalls in der Maschineneinheit 18 vorzugsweise in Zuordnung zu jeder Druckbildstelle jeweils ein dezentraler Rasterimageprozessor 03 (RIP) vorgesehen. Im Unterschied zu dem in der Fig. 4 dargestellten Ausführungsbeispiel ist ein zentraler Fileserver 24 vorgesehen, der mit dem Rechner 01 in der Druckvorstufe und/oder mit dem Leitstand 08 verbunden ist und der die aus dem Bereich der Druckvorstufe bereitgestellten Bilddaten 02 einer vorzugsweise mehrfarbig herzustellenden Seite eines Druckerzeugnisses speichert. An die jeweils eine Bebilderungsvorrichtung 13 steuernden Steuervorrichtungen 14 wird z. B. von dem Rechner 01 der Druckvorstufe nur eine Information zur Identifikation und Verfügbarkeit einer der Seiten des herzustellenden Druckerzeugnisses gesendet. Nach Eingang dieser Information zur Identifikation und Verfügbarkeit einer der herzustellenden Seiten holt sich die eine Bebilderungsvorrichtung 13 steuernde Steuervorrichtung 14 die Datei zu der betreffenden Seite aus dem zentralen Fileserver 24, z. B. in einem zum Dateiaustausch geeigneten FTP-Verfahren (File Transfer Protocol). Jede im zentralen Fileserver 24 ungerastert gespeicherte Datei enthält die vollständige Information über die vollständige Seite des herzustellenden Druckerzeugnisses. Der Rasterungsprozess wird wie in dem anhand der Fig. 4 erläuterten Ausführungsbeispiel mithilfe dezentraler Rasterimageprozessoren 03 (RIP) ausgeführt, wobei nur die an der betreffenden Druckbildstelle benötigte Farbseparation aus der Datei ausgewählt und sodann gerastert wird. Der zentrale Fileserver 24 ist z. B. über eine Standleitung mit der betreffenden Maschineneinheit 18 verbunden. Das Konzept eines zentralen Fileservers 24 hat den Vorteil, dass jede Datei mit der vollständigen Information über die Seite des herzustellenden Druckerzeugnisses bedarfsgerecht, d. h. insbesondere anhand der mindestens eine Druckbildstelle betreffenden Anordnungsinformation oder anhand der mindestens eine Druckform betreffenden Belegungsinformation selektiv angefordert bzw. abgerufen werden kann.

In allen in Verbindung mit den Fig. 1 bis 5 beschriebenen Ausführungsbeispielen ist es möglich, die Übertragung der Bilddaten 02, Rasterdaten 04 oder der Dateien mit der vollständigen Information über die herzustellende Seite eines Druckerzeugnisses durch eine Zwischenspeicherung von dem Bebilderungsprozess zu entkoppeln.

Fig. 6 zeigt ein Beispiel für eine detaillierte Ausgestaltung des Netzwerkes 09 zur Steuerung und/oder Überwachung der Druckmaschine, insbesondere zur Steuerung von Antrieben in der Druckmaschine, wobei die Druckmaschine z. B. mehrere, hier drei Drucktürme 51 aufweist, welche ihrerseits jeweils mehrere Druckwerke 53, hier Doppeldruckwerke 53, aufweisen. Die Druckwerke 53 eines Druckturms 51 bilden zusammen mit ihren jeweiligen Antriebseinheiten 58 bzw. Regeleinheiten 58 mit ihrem jeweils zugehörigen Antriebsmotor M eine Gruppe 68, insbesondere eine Druckstellengruppe 68, welche über eine untergeordnete Antriebssteuerung 67 dieser Gruppe 68 mit einer Signalleitung 59 verbunden ist. Eine Recheneinheit 63, z. B. eine übergeordnete Antriebssteuerung 63 kann auch Untergruppen 52 von Druckwerken 53, z. B. Druckeinheiten 52 oder andere Teilungen mit zugeordneten Antriebseinheiten 58 bzw. Regeleinheiten 58 verwalten. Mit der Signalleitung 59 sind auch weitere, vorzugsweise jeweils eine eigene untergeordnete Antriebssteuerung 67 aufweisende Einheiten, z. B. ein oder mehrere Leitelemente 57 und/oder ein oder mehrere Falzapparate 56 verbunden. Die Signalleitung 59 ist hier vorteilhaft in einer Ringtopologie, insbesondere als Doppelring, ausgeführt und weist eine oder mehrere der in Verbindung mit den Fig. 1 bis 5 genannten Eigenschaften auf. Insbesondere sind den Formzylindern 12 der Druckeinheiten 52 jeweils mindestens eine Bebilderungsvorrichtung 13 und eine Steuervorrichtung 14 zugeordnet, wie diese zuvor anhand der Fig. 1 bis 5 beschrieben worden sind, wobei in der Fig. 6 die jeweilige Bebilderungsvorrichtung 13 und Steuervorrichtung 14 zur Wahrung der Übersichtlichkeit nicht dargestellt sind. Die Steuervorrichtung 14 einer jeden Bebilderungsvorrichtung 13 ist in der zuvor in Verbindung mit den Fig. 1 bis 5 beschriebenen Weise jeweils über mindestens eine Datenleitung 16 mit dem zum Transport von Bilddaten 02 und/oder Rasterdaten 04 vorgesehenen Netzwerk 19 verbunden, wobei vorgesehen sein kann, dass in der Druckmaschine verlegte Leitungen zum Transport von in Verbindung mit unterschiedlichen Netzwerken 07; 09; 19 erwähnten Daten und Dateien verwendet werden.

Gemäß dem Beispiel der Fig. 6 sind den Antriebseinheiten 58 bzw. Regeleinheiten 58 jeweils Antriebsmotoren M zugeordnet, welche jeweils über mindestens eine Signalleitung 59 direkt oder indirekt miteinander und mit einer Rechen- und Datenverarbeitungseinheit 61, z. B. einen Rechner 61, verbunden sind. Die Rechen- und Datenverarbeitungseinheit 61 kann zusätzlich eine Bedieneinheit aufweisen oder mit einer Bedieneinheit 60, z. B. einem Leitstand 60, in Verbindung stehen. Die Antriebseinheiten 58 bzw. Regeleinheiten 58 können prinzipiell in Serie (nicht dargestellt) direkt in einer Ring-, Bus- oder einer anderen Netzwerkstruktur oder aber - wie dargestellt - in einer Baumstruktur durch Signalleitungen 62 mit der Signalleitung 59 verbunden sein.

Die mindestens eine Signalleitung 59 führt Signale einer Leitachsposition Φ, welche durch eine übergeordnete Antriebssteuerung 63 vorgegeben wird. Die Signalleitung 59 stellt zusammen mit der Recheneinheit 63 die sogenannte virtuelle Leitachse 59, 63 (elektronische Welle) für die mit ihr verbundenen Einheiten dar, an welcher sich die Einheiten in ihrer Lage bzw. Position orientieren. Diese Leitachsposition Φ wird an die Antriebseinheit 58 bzw. Regeleinheit 58 als Vorgabe (Führungsgröße) weitergegeben.

Die Rechen- und Datenverarbeitungseinheit 61 liefert insbesondere eine Vorgabe zur gewünschten Produktionsgeschwindigkeit an die übergeordnete Antriebssteuerung 63 und steht somit über die übergeordnete Antriebssteuerung 63, die Signalleitung 59 (Quer-Kommunikation) und die Signalleitungen 62 mit den Antriebseinheiten 58 bzw. Regeleinheiten 58 in Verbindung.

Jeder der Antriebseinheiten 58 bzw. Regeleinheiten 58 ist ein spezifischer Offset ΔΦᵢ, z. B. ein Winkelversatz ΔΦᵢ, vorgebbar, welcher eine permanente, aber veränderbare Verschiebung gegenüber der Leitachsposition Φ festlegt. Dieser Offset ΔΦᵢ ist z. B. direkt an der Antriebseinheit 58 bzw. Regeleinheit 58 und/oder über die Rechen- und Datenverarbeitungseinheit 61 eingebbar und/oder für spezifische Betriebssituationen, insbesondere spezifische Bahnführungen in einem Speicher in der Rechen- und Datenverarbeitungseinheit 61 abgelegt und abrufbar. Ist die Signalleitung 59 entsprechend, beispielsweise als ein breitbandiges Netzwerk, vorzugsweise als ein echtzeitfähiger Feldbus, vorzugsweise als ein standardisierter, z. B. unter der Bezeichnung SERCOS bekannter Feldbus ausgeführt, so kann die Information über den jeweils vorgegebenen und festgelegten Offset ΔΦᵢ sowie die "rotierende" Leitachsposition Φ gegebenenfalls über die gemeinsame Signalleitung 59 erfolgen. Die Signalleitung 59 kann auch zusätzlich jeweils mit einem Steuersystem 74 verbunden sein, welches beispielsweise die von den Antriebsmotoren M verschiedenen Stellglieder und Antriebe der Druckeinheiten 52 bzw. Druckwerke 53 bzw. Falzapparate 56, z. B. Farbzuführung, Stellbewegungen von Walzen und/oder Zylindern, Feuchtwerk, Positionen etc. steuert und/oder regelt.

Der unter der Bezeichnung SERCOS bekannte Feldbus ist in der internationalen Norm IEC 61491 standardisiert. Dieser Norm sind Einzelheiten zur Ausgestaltung eines SERCOS-Feldbusses entnehmbar. Als Feldbus wird im Gegensatz zu Bürokommunikationsanwendungen ein industrielles Kommunikationssystem zur Vernetzung einer Vielzahl von Feldgeräten bezeichnet, wobei Feldgeräte als Sensoren, Stellglieder oder Antriebe ausgebildet sein können und wobei die Datenübertragungssicherheit auf den zumindest teilweise recht langen, bis zu einigen hundert Metern betragenden Übertragungsstrecken zwischen den dezentral angeordneten Feldgeräten trotz des rauen Milieus in einer industriellen Umgebung mit ihrem z. B. weiten Temperaturbereich, vielfältigen Verschmutzungen und intensiven elektromagnetischen Störeinflüssen gewährleistet ist. Am Markt haben sich unterschiedliche Feldbussysteme mit unterschiedlichen Eigenschaften etabliert, jedoch sind grundlegende Eigenschaften von Feldbussystemen z. B. in der internationalen Norm IEC 61158 standardisiert. Der SERCOS-Feldbus eignet sich besonders gut zur Vernetzung von Antrieben, insbesondere auch lagegeregelten Antrieben. Ein SERCOS-Feldbus der dritten Generation, der SERCOS III genannt wird, nutzt die Mechanismen eines Ethernet-Kommunikationssystems und ist echtzeitfähig, d. h. die zur Kommunikation von Feldgeräten erforderliche Signalverarbeitungsgeschwindigkeit in einem SERCOS-Netzwerk ist mindestens ebenso schnell wie die signalerzeugenden oder die zu steuernden Abläufe, z. B. die Rotation der Formzylinder 12 in der Druckmaschine. Ein weiterer häufig zum Einsatz gebrachter Feldbus ist unter der Bezeichnung PROFIBUS bekannt, wobei Eigenschaften dieses Feldbusses insbesondere in der internationalen Norm IEC 61784 in Verbindung mit der internationalen Norm 61158 festgelegt sind. In der Ausgestaltung als PROFINET sind für den PROFIBUS ausgelegte Feldgeräte z. B. mittels eines Proxies oder Proxyservers, d. h. eines im Datenverkehr vermittelnden Dienstprogramms, oder eines speziellen, gleichfalls den Datenverkehr zwischen Feldgeräten vermittelnden I/O-Controllers an ein Ethernet-Kommunikationssystem angebunden, wobei ein Proxy Daten vorzugsweise für beide Kommunikationsrichtungen zwischen Feldgeräten z. B. jeweils in ein in der jeweiligen Kommunikationsrichtung gültiges, standardisiertes Format bringt. Somit sind die verschiedenen Netzwerke (07; 09; 19) vorzugsweise jeweils über mindestens eine im Datenverkehr zwischen den Netzwerken (07; 09; 19) vermittelnde Vermittlungsstelle miteinander verbunden, wobei diese Vermittlungsstelle als ein Proxy oder Controller ausgebildet sein kann.

Der jeweilige Offset ΔΦᵢ gegenüber der Leitachsposition Φ wird z. B. vor Produktionsbeginn vom Leitstand 60 oder von der Rechen- und Datenverarbeitungseinheit 61 an die Antriebseinheiten 58 bzw. Regeleinheiten 58 überführt und dort gespeichert. In vorteilhafter Ausführung ist der Offset ΔΦᵢ während des Betriebes bzw. der Produktion der Druckmaschine an der Antriebseinheit 58 bzw. Regeleinheit 58 selbst, insbesondere aber über die Rechen- und Datenverarbeitungseinheit 61 veränderbar.

Die Offsetwerte ΔΦᵢ für die verschiedenen Antriebseinheiten 58 bzw. Regeleinheiten 58 können in einer Variante auch in der übergeordneten Antriebssteuerung 63 gespeichert werden. In diesem Fall erhält jede Antriebseinheit 58 bzw. Regeleinheit 58 über die Signalleitungen 59; 62 (bzw. in Serie: nur 59) als Vorgabe die Summe aus der rotierenden Leitachsposition Φ und dem spezifischen, gespeicherten Offsetwert ΔΦᵢ der jeweiligen Antriebseinheit 58 bzw. Regeleinheit 58.

So folgen alle Antriebseinheiten 58 bzw. Regeleinheiten 58, beispielsweise die Antriebseinheiten 58 bzw. Regeleinheiten 58 der beiden ersten z. B. als Drucktürme 51 ausgeführten Einheiten sowie der Antriebseinheit 58 bzw. Regeleinheit 58 der als Falzapparat 56 ausgeführten Einheit jeweils der rotierenden Leitachsposition Φ aus der übergeordneten Antriebssteuerung 63 mit jeweils einem festgelegten Offsetwert ΔΦᵢ relativ zur absoluten Lage der Leitachsposition Φ.

In dem Ausführungsbeispiel gemäß der Fig. 6 ist die Signalleitung 59 mit mehreren, hier zwei, übergeordneten Antriebssteuerungen 63 verbunden, welche jeweils voneinander verschiedene Signale einer jeweiligen Leitachsposition Φa; Φb einer Leitachse in die Signalleitung 59 einspeisen können. Dies ist beispielsweise von Vorteil, wenn die Druckmaschine bzw. deren Drucktürme 51 und/oder Druckeinheiten 52 und/oder Druckwerke 53 und die zugehörigen Falzapparate 56 sowie Leitelemente 57 mehreren, getrennt oder gemeinsam betreibbaren Sektionen 71; 72 zuordenbar sein sollen. Es können jedoch Produktionen und Bahnführungen die in Fig. 6 durch eine strichlierte Linie angedeutete Sektionstrennung überschreiten und aus Druckeinheiten 53 der einen, in Druckeinheiten 53 der anderen und/oder den Falzapparat 56 der anderen Sektion 71; 72 geführt werden. Die einzelnen Drucktürme 51 sind beispielsweise verschiedenen Falzapparaten 56 zuordenbar. Auch innerhalb eines Druckturmes 51 sind Untergruppen, z. B. Druckeinheiten 53, verschiedenen Bahnen des Bedruckstoffes mit unterschiedlichen Bahnführungen zuordenbar, welche auf einen gemeinsamen oder gar auf verschiedene Falzapparate 56 geführt werden können. Die Sektionen 71; 72 sind logisch somit nicht als starre Einheiten zu verstehen, sondern als zusammenwirkende Maschineneinheiten 18. In diesem Ausführungsbeispiel bilden die zwei, übergeordneten Antriebssteuerungen 63 jeweils eine Sektionssteuervorrichtung 23, wie sie zuvor in Verbindung mit den Figuren 1, 4 und 5 beschrieben wurde.

Die übergeordneten Antriebssteuerungen 63 beziehen ihre Vorgaben bezüglich Ausgangspunkt und Produktionsgeschwindigkeiten der jeweiligen Sektion 71; 72 und/oder Bahnführung von einer jeweils zugeordneten Rechen- und Datenverarbeitungseinheit 61, welche wiederum mit mindestens einem Leitstand 60 verbunden sind. In einer vorteilhaften Ausführung sind die beiden Rechen- und Datenverarbeitungseinheiten 61 über eine Signalleitung 64 miteinander und mit einer weiteren Signalleitung 73 verbunden, welche mehrere, hier zwei, Leitstände 60 miteinander verbindet. Die drei Signalleitungen 59; 64; 73 bilden somit unterschiedliche Ebenen des Netzwerkes 09 zur Steuerung und/oder Überwachung der Druckmaschine. In einer vorteilhaften Ausgestaltung werden zumindest über die Signalleitung 73, gegebenenfalls aber auch über die Signalleitung 64, auch die im Netzwerk 19 zur Kommunikation von Bilddaten 02 und/oder Rasterdaten 04 zu transportierenden Dateien transportiert, wobei vorzugsweise die Leitstände 60 und/oder die Rechen- und Datenverarbeitungseinheiten 61 die jeweiligen auf den Signalleitungen 64; 73 zu transportierenden Daten und/oder Dateien hinsichtlich ihres jeweilig erforderlichen Datenflusses managen und ihrer jeweiligen Zieladresse zuführen oder in einem z. B. als Fileserver 24 ausgebildeten Speicher abrufbereit vorhalten. Das gesamte Netzwerk 09 zur Steuerung und/oder Überwachung der Druckmaschine ist in allen seinen verschiedenen Steuerungsebenen vorzugsweise Ethernet-basiert ausgebildet sein, z. B. als ein SERCOS III-Feldbus oder als ein PROFINET-Feldbus.

Für die einzelnen Antriebseinheiten 58 bzw. Regeleinheiten 58 relevante Offsetwerte ΔΦᵢ werden für die betreffende Produktion von der Rechen- und Datenverarbeitungseinheit 61 bzw. den Rechen- und Datenverarbeitungseinheiten 61 über die Signalleitung 64 den den jeweiligen Antriebseinheiten 58 bzw. Regeleinheiten 58 zugeordneten untergeordneten Antriebssteuerungen 67 zugeleitet und vorzugsweise dort gespeichert und mit der Leitachsposition Φa; Φb zu den Leitachspositionen Φᵢ verarbeitet. Sind Untergruppen 52, z. B. Druckeinheiten 52, einer Gruppe 68, z. B. eines Druckturms 51, zwei verschiedenen Bahnen zugeordnet, so verarbeitet die untergeordnete Antriebssteuerung 67 jeweils die für die betreffende Antriebseinheit 58 bzw. Regeleinheit 58 zugeordnete Leitachsposition Φa; Φb der Leitachse, je nach Zugehörigkeit der betreffenden Druckbildstelle zu der einen oder anderen Bahn, mit dem für diese Bahnführung vorgegebenen Offsetwert ΔΦᵢ.

Die Übermittlung an die untergeordneten Antriebssteuerungen 67 erfolgt in diesem Beispiel jedoch nicht direkt, sondern über ein Steuersystem 74, welches der jeweiligen Gruppe 68 bzw. der eine eigene untergeordnete Antriebssteuerung 67 aufweisende Einheit (z. B. Falzapparat 56) zugeordnet ist. Das Steuersystem 74 ist mit der Signalleitung 64 (bzw. mit der Rechen- und Datenverarbeitungseinheit 61) entweder beispielsweise über eigene Signalleitungen 75 verbunden oder aber Leitungsabschnitte der Signalleitungen 75 sind Bestandteil der als Netzwerk 64 ausgeführten Signalleitung 64. Das Steuersystem 74 steuert und/oder regelt beispielsweise die von den Antriebsmotoren M verschiedenen Stellglieder und Antriebe der Druckeinheiten 52 bzw. Druckstellengruppen 68 bzw. Druckwerke 53 bzw. Falzapparate 56, z. B. Farbzuführung, Stellbewegungen von Walzen und/oder Zylindern, Feuchtwerk, Positionen etc. Das Steuersystem 74 weist eine oder mehrere (insbesondere speicherprogrammierbare) Steuereinheiten 76 auf. Diese Steuereinheit 76 ist über eine Signalleitung 77 mit der untergeordneten Antriebssteuerung 67 verbunden. Im Fall mehrerer Steuereinheiten 76 sind diese durch die Signalleitung 77 auch untereinander verbunden.

Das Steuersystem 74 bzw. deren Steuereinheit(en) 76 ist/sind in vorteilhafter Ausführung durch nicht dargestellte Koppler, z. B. jeweils als Schnittstellenkarte ausgebildete Netzwerkkoppler, z. B. durch einen Proxy, lösbar mit der Signalleitung 64 verbunden. Hierdurch ist die Gruppe 68 prinzipiell für sich abgeschlossen betreibbar, wobei die Steuerung der Antriebseinheiten 58 bzw. Regeleinheiten 58 über den Strang der untergeordneten Antriebssteuerung 67 mit der Signalleitung 62 und die Steuerung der weiteren Funktionen der Gruppe 68 über den Strang des Steuersystems 74 erfolgt. Sollwerte sowie Istwerte und Abweichungen sind über den Koppler ein- bzw. ausgebbar. Die untergeordnete Antriebssteuerung 67 übernimmt in diesem Fall die Vorgabe einer Leitachsposition Φ. Aus diesem Grund und aus Gründen der Redundanz ist es vorteilhaft, wenn alle untergeordneten Antriebssteuerungen 67 mit der Möglichkeit zur Erzeugung und Vorgabe einer Leitachsposition Φ ausgebildet sind.

Die Offsetwerte ΔΦᵢ werden in der Ausführung nach Fig. 6 somit von der Signalleitung 64 über das jeweilige Steuersystem 74 der betreffenden untergeordneten Antriebssteuerung 67 zugeführt. Dabei können die Offsetwerte ΔΦᵢ alternativ von dort an die Antriebseinheiten 58 bzw. Regeleinheiten 58 gegeben und dort gespeichert und verarbeitet werden.

Bei dem Ausführungsbeispiel nach Fig. 6 kann die übergeordnete Antriebssteuerung 63 entfallen, wenn z. B. eine oder mehrere Gruppen 68 bzw. eine der eine eigene untergeordnete Antriebssteuerung 67 aufweisenden Einheiten (z. B. Falzapparat 56) eine untergeordnete Antriebssteuerung 67 aufweist. Die virtuelle Leitachse bzw.
Leitachsposition Φ ist dann z. B. von einer der Antriebssteuerungen 67 vorgebbar.

Für den Umlauf einer noch nicht an die einzelnen Antriebseinheiten 58 bzw. Regeleinheiten 58 angepassten Leitachse und die die Winkellage betreffenden Informationen (Offsetwerte ΔΦᵢ, Registerabweichungen) können gesonderte Signalleitungen 59 bzw. 64; 75; 77 vorgesehen sein. So kann einerseits die Grundausrichtung der einzelnen Antriebseinheiten 58 bzw. Regeleinheiten 58 durch Übermittlung und/oder Veränderung der Offsetwerte ΔΦᵢ als auch eine während der Produktion erforderliche Korrektur der Winkellage im Hinblick auf die Regelung eines Längsregisters über die gesonderte Signalleitung 64; 75; 77 an die untergeordneten Antriebssteuerungen 67 (bzw. die Antriebseinheiten 58 bzw. Regeleinheiten 58 selbst) erfolgen. Im Fall einer Registerregelung wird beispielsweise ein entsprechender Stellwert über die Signalleitung 77 zur Steuerung 67 geführt und bei der Ermittlung der spezifischen Sollwinkellage für die einzelne Antriebseinheit 58 bzw. Regeleinheit 58 dem aus Leitachsposition Φ; Φa; Φb und Offset ΔΦᵢ gebildeten Sollwert überlagert. Durch diese Vorgehensweise wird ein erhöhter Datenfluss über die die Leitachse führende Signalleitung 59 vermieden. Es müssen auch nicht viele unterschiedliche, auf die jeweiligen Antriebseinheiten 58 bzw. Regeleinheiten 58 bereits angepasste Datenpakete durch diese Signalleitung 59 geführt werden. Dies hätte bezogen auf die einzelne Antriebseinheit 58 bzw. Regeleinheit 58 eine deutlich erniedrigte mögliche Signalrate zur Folge. Die untergeordneten Antriebssteuerungen 67 verwalten lediglich eine eng begrenzte Anzahl von Antriebseinheiten 58 bzw. Regeleinheiten 58, sodass die Daten in den Signalleitungen 62 entsprechend handhabbar sind. Dies ist jedoch nicht vergleichbar mit der Anzahl sämtlicher, einer gesamten Sektion 71; 72 zugeordneter Antriebseinheiten 58 bzw. Regeleinheiten 58.

Für alle beschriebenen Ausführungen wird mindestens eine Leitachsposition Φ; Φa; Φb durch mindestens eine Antriebssteuerung 63; 67 vorgegeben, an welcher bzw. an welchen sich die Antriebseinheiten 58 bzw. Regeleinheiten 58 der verschiedenen mechanisch voneinander unabhängig angetriebenen Einheiten in ihrer Lage orientieren. Jedem dieser Antriebseinheiten 58 bzw. Regeleinheiten 58 ist ein spezifischer Offsetwert ΔΦᵢ zuordenbar, welcher jeweils die relative Soll-Lage zur Leitachsposition Φ; Φa; Φb der zugewiesenen Leitachse ausdrückt. So werden beispielsweise für eine bestimmte Produktion sämtlichen mechanisch voneinander unabhängigen Antriebseinheiten 58 bzw. Regeleinheiten 58 der Drucktürme 51 (bzw. Druckeinheiten 52 bzw. Druckwerke 53) sowie der zugeordneten Antriebseinheit 58 bzw. Regeleinheit 58 des Falzapparates 56 und gegebenenfalls Leitelementen 57 jeweils spezifische Offsetwerte ΔΦᵢ in Bezug auf die für die Produktion relevante Leitachse zugeordnet.

Diese Offsetwerte ΔΦᵢ beruhen im Wesentlichen auf rein geometrischen Verhältnissen. Zum einen sind sie von der gewählten Bahnführung, d. h. vom Bahnweg zwischen den einzelnen Einheiten abhängig. Zum anderen können sie von einer zufälligen oder gewählten Nulllage der einzelnen Antriebseinheit 58 bzw. Regeleinheit 58 abhängen. Letzteres entfällt für die einzelne Antriebseinheit 58 bzw. Regeleinheit 58, wenn deren definierte Nulllage mit der Nulllage der Leitachse zusammenfällt.

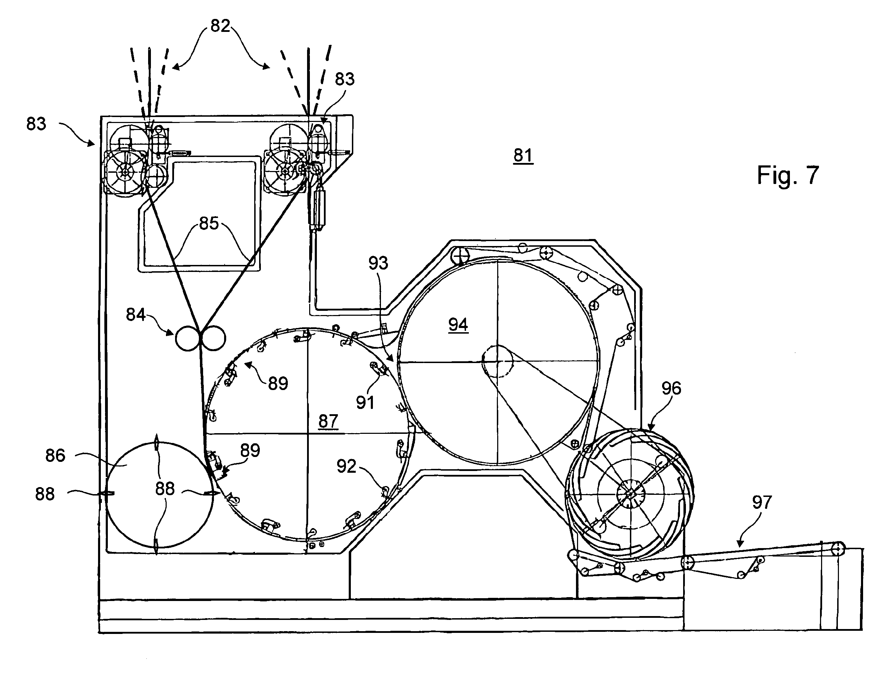

Fig. 7 zeigt in einer vereinfachten Darstellung beispielhaft einen Falzapparat 81 der Druckmaschine. Vorzugsweise mehrere Stränge 82 des als eine Materialbahn ausgebildeten, in der Druckmaschine zuvor bedruckten Bedruckstoffes laufen jeweils von einem z. B. motorisch angetriebenen Zugwalzenpaar 83 gezogen in den Falzapparat 81 ein, wobei z. B. mehrere Strangbündel 85 an einem Walzenpaar 84 zusammengeführt werden. Die zusammengeführten und übereinandergelegten Stränge 82 des Bedruckstoffes werden zu einem mit einem z. B. vierfachen Schneidzylinder 86 zusammenwirkenden z. B. 7-fachem Transportzylinder 87 weitertransportiert. Der Schneidzylinder 86 weist an seinem Umfang in dessen Axialrichtung verlaufende, vorzugsweise äquidistant versetzt angeordnete Schneidmesser 88 auf, die mit am Umfang des Transportzylinders 87 ausgebildeten Schneidspalten 89 zusammenwirken. Jedes quer zur Transportrichtung der Stränge 82 geschnittene Exemplar des Druckerzeugnisses wird an der Mantelfläche des Transportzylinders 87 durch eine an dessen Umfang angeordnete Haltevorrichtung 91, z. B. Punkturleiste 91, gehalten.

Am Transportzylinder 87 sind ferner sieben Falzmesser 92 angebracht, die jeweils bei Erreichen eines Spalts 93 (je nach Sammel- oder Normalbetrieb jedes oder jedes mehrfache Mal) zwischen dem Transportzylinder 87 und einem diesem in Transportrichtung des Bedruckstoffes nachgeordneten Falzklappenzylinder 94 ausgefahren werden, um die am Transportzylinder 87 transportierten Exemplare des Druckerzeugnisses an den Falzklappenzylinder 94 zu übergeben und zu falzen. Hierzu weist der Falzklappenzylinder 94 in Umfangsrichtung gleichmäßig beabstandet z. B. ebenso viele Falzklappen (nicht dargestellt) auf, wie die Anzahl der Falzmesser 92 und/oder der Haltevorrichtungen 91 am Transportzylinder 87, hier insbesondere sieben. Die gefalzten Exemplare des Druckerzeugnisses werden vom Falzklappenzylinder 94 an ein Schaufelrad 96 übergeben und von diesem auf eine Auslagevorrichtung 97, z. B. ein Förderband 97, ausgelegt. Vorzugsweise innerhalb des Falzapparates 81 kann eine Vorrichtung zur Ausbildung eines dritten Falzes, d. h. eines zweiten Längsfalzes, vorgesehen sein (nicht dargestellt).

Der Falzapparat 81, der wie eine Druckeinheit 11 gleichfalls eine Maschineneinheit 18 der Druckmaschine darstellt, ist vorzugsweise gleichfalls in das Netzwerk 09 zur Steuerung und/oder Überwachung der Druckmaschine eingebunden, z. B. gemäß der Detaildarstellung der Fig. 6. Dadurch kann mindestens eine, vorzugsweise jedoch jede der in der Druckmaschine vorgesehenen Bebilderungsvorrichtungen 13 in Verbindung mit ihrer jeweiligen Steuervorrichtung 14 in Abhängigkeit von dem im Falzapparat 81 herzustellenden Falzprodukt gesteuert werden. Insbesondere kann mindestens eine zu bebildernde Druckbildstelle in Abhängigkeit von einem Schnittregister des Falzapparates 81 gesteuert werden.

### Bezugszeichenliste

- 01: Rechner
- 02: Bilddaten
- 03: Rechner, Rasterimageprozessor
- 04: Rasterdaten
- 05: -
- 06: Speichervorrichtung
- 07: Netzwerk in der Druckvorstufe
- 08: Rechner, Leitstand
- 09: Netzwerk zur Steuerung der Druckmaschine
- 10: -
- 11: Druckeinheit, H-Druckeinheit
- 12: Formzylinder
- 13: Bebilderungsvorrichtung
- 14: Steuervorrichtung
- 15: -
- 16: Datenleitung
- 17: Rechner
- 18: Maschineneinheit
- 19: Netzwerk für Bilddaten und/oder Rasterdaten
- 20: -
- 21: Logikeinheit
- 22: Antriebssteuervorrichtung
- 23: Sektionssteuervorrichtung
- 24: Fileserver
- 25: -
- 26: Schnittstelle
- 27 bis: -
- 51: Druckturm
- 52: Untergruppe, Druckeinheit
- 53: Druckwerk, Doppeldruckwerk
- 54: -
- 55: -
- 56: Falzapparat
- 57: Leitelement
- 58: Antriebseinheit, Regeleinheit
- 59: Signalleitung, Verbindung
- 60: Bedieneinheit, Leitstand
- 61: Rechen- und Datenverarbeitungseinheit, Rechner
- 62: Signalleitung, Netzwerk, Bus
- 63: Recheneinheit, Antriebssteuerung, übergeordnet
- 64: Signalleitung, Netzwerk
- 65: -
- 66: -
- 67: Antriebssteuerung, untergeordnet
- 68: Gruppe, Druckstellengruppe
- 69: 69 -
- 70: -
- 71: Sektion
- 72: Sektion
- 73: Signalleitung
- 74: Steuersystem
- 75: Signalleitung
- 76: Steuereinheit
- 77: Signalleitung
- 78: -
- 79: -
- 80: -
- 81: Falzapparat
- 82: Strang
- 83: Zugwalzenpaar
- 84: Walzenpaar
- 85: Strangbündel
- 86: Schneidzylinder
- 87: Transportzylinder
- 88: Schneidmesser
- 89: Schneidspalt
- 90: Haltevorrichtung, Punkturleiste
- 91: Falzmesser
- 92: Spalt
- 93: Falzklappenzylinder
- 94: -
- 95: Schaufelrad
- 96: Auslagevorrichtung, Förderband

- Φ: Leitachsposition
- Φa: Leitachsposition
- Φb: Leitachsposition

- M: Antriebsmotor

## Patentansprüche

1. Vorrichtung zum Ausbilden eines Druckbildes an mindestens einer Druckbildstelle, aufweisend eine Druckmaschine mit mindestens einer an mehreren Druckbildstellen jeweils mindestens ein Druckbild ausbildenden Bebilderungsvorrichtung (13), wobei die jeweiligen Druckbilder zu derselben Seite eines mit der Druckmaschine herzustellenden Druckerzeugnisses gehören, wobei die Seite des Druckerzeugnisses vor der Ausbildung ihrer Druckbilder in Form einer Bilddaten (02) enthaltenen Datei vorliegt, wobei die Datei Bilddaten (02) zu allen Druckbildern der Seite des Druckerzeugnisses enthält, wobei jeder Druckbildstelle ein Rasterimageprozessor (03) zugeordnet ist, wobei jeder Rasterimageprozessor (03) nur Bilddaten (02) des der jeweiligen Druckbildstelle zugeordneten Druckbildes der Seite des Druckerzeugnisses in Rasterdaten (04) umwandelt, **dadurch gekennzeichnet, dass** ein Netzwerk (19) zur elektronischen Kommunikation zumindest von Bilddaten (02) vorgesehen ist, wobei jeder Rasterimageprozessor (03) mit einer Bilddaten (02) empfangenden Schnittstelle (26) an dieses Netzwerk (19) angeschlossen ist, wobei dieses Netzwerk (19) an der Schnittstelle (26) jedes Rasterimageprozessors (03) die Datei mit Bilddaten (02) zu allen Druckbildern der Seite des Druckerzeugnisses zur Verfügung stellt.

2. Vorrichtung nach Anspruch 1, **dadurch gekennzeichnet, dass** die Druckbildstelle auf einem Formzylinder (12) angeordnet ist.

3. Vorrichtung nach Anspruch 1, **dadurch gekennzeichnet, dass** die Druckmaschine mehrere in Transportrichtung eines in der Druckmaschine bedruckten Bedruckstoffes einander nachfolgend angeordnete Formzylinder (12) aufweist.

4. Vorrichtung nach Anspruch 3, **dadurch gekennzeichnet, dass** mehreren der Formzylinder (12) jeweils eine Bebilderungsvorrichtung (13) zugeordnet ist.

5. Vorrichtung nach Anspruch 4, **dadurch gekennzeichnet, dass** jede der Bebilderungsvorrichtungen (13) an der jeweiligen Druckbildstelle des jeweiligen Formzylinders (12) jeweils mindestens ein Druckbild ausbildet.

6. Vorrichtung nach Anspruch 1, **dadurch gekennzeichnet, dass** die jeweiligen Druckbilder zumindest einen Teil derselben Seite des mit der Druckmaschine herzustellenden Druckerzeugnisses drucken.

7. Vorrichtung nach Anspruch 1, **dadurch gekennzeichnet, dass** die Schnittstelle (26) jedes Rasterimageprozessors (03) den jeweils zu rasternden Teil der Bilddaten (02) aufgrund einer bereitgestellten, die Druckbildstelle betreffenden Anordnungsinformation oder Belegungsinformation dem Netzwerk (19) zur elektronischen Kommunikation zumindest von Bilddaten (02) selektiv entnimmt.

8. Vorrichtung nach Anspruch 1, **dadurch gekennzeichnet, dass** jede Bebilderungsvorrichtung (13) und die zugehörige Schnittstelle (26) zusammen mit einer die Bebilderungsvorrichtung (13) steuernden Steuervorrichtung (14) jeweils in der Druckmaschine angeordnet sind.

9. Vorrichtung nach Anspruch 3, **dadurch gekennzeichnet, dass** für jeden Formzylinder (12) der Druckmaschine eine Bebilderungsvorrichtung (13) mit einer einen Rasterimageprozessor (03) aufweisenden Steuervorrichtung (14) vorgesehen ist.

10. Vorrichtung nach Anspruch 3, **dadurch gekennzeichnet, dass** jeder Formzylinder (12) in seiner Axialrichtung und/oder in seiner Umfangsrichtung jeweils mehrere Druckbildstellen aufweist.

11. Vorrichtung nach Anspruch 1, **dadurch gekennzeichnet, dass** die Bilddaten (02) in Form einer TIFF-Datei, in Form einer postscript-Datei oder in Form einer Datei in einem pdf-Format vorliegen.

12. Vorrichtung nach Anspruch 1, **dadurch gekennzeichnet, dass** das Netzwerk (19) zur elektronischen Kommunikation zumindest von Bilddaten (02) als ein lokales Netzwerk (19) ausgebildet ist.

13. Vorrichtung nach Anspruch 1, **dadurch gekennzeichnet, dass** das Netzwerk (19) zur elektronischen Kommunikation zumindest von Bilddaten (02) als ein öffentliches Netzwerk (19) ausgebildet ist.

14. Vorrichtung nach Anspruch 1, **dadurch gekennzeichnet, dass** die Schnittstelle (26) leitungsgebunden und/oder drahtlos übertragene Bilddaten (02) empfängt.

15. Vorrichtung nach Anspruch 1, **dadurch gekennzeichnet, dass** die Schnittstelle (26) die Bilddaten (02) von einem Rechner (01) einer Druckvorstufe empfängt.

16. Vorrichtung nach Anspruch 1, **dadurch gekennzeichnet, dass** eine Speichervorrichtung (06) vorgesehen ist, wobei die Speichervorrichtung (06) von der Schnittstelle (26) empfangene Bilddaten (02) vor oder nach ihrer Umwandlung im Rasterimageprozessor (03) speichert.

17. Vorrichtung nach Anspruch 8, **dadurch gekennzeichnet, dass** die Steuervorrichtung (14) vom Rasterimageprozessor (03) ermittelte Rasterpunkte in Abhängigkeit von einem in der Druckmaschine für die Druckbildstelle vorgesehenen Ort kalibriert.

18. Vorrichtung nach Anspruch 8, **dadurch gekennzeichnet, dass** die Steuervorrichtung (14) vom Rasterimageprozessor (03) ermittelte Rasterpunkte in Abhängigkeit von einer an der Druckbildstelle aufzutragenden Druckfarbe und/oder von einem mit dem an der Druckbildstelle ausgebildeten Druckbild zu bedruckenden Bedruckstoff kalibriert.

19. Vorrichtung nach Anspruch 8, **dadurch gekennzeichnet, dass** die Steuervorrichtung (14) vom Rasterimageprozessor (03) ermittelte Rasterpunkte in Abhängigkeit von einem Signal eines in der Druckmaschine angeordneten, den Druckprozess überwachenden Inspektionssystems kalibriert.

20. Vorrichtung nach Anspruch 8, **dadurch gekennzeichnet, dass** die Steuervorrichtung (14) mit einem Rechner (08) zur Steuerung und/oder Überwachung der Druckmaschine verbunden ist.

21. Vorrichtung nach Anspruch 20, **dadurch gekennzeichnet, dass** der Rechner (08) zur Steuerung und/oder Überwachung der Druckmaschine an ein Netzwerk (09) zur Steuerung und/oder Überwachung der Druckmaschine angeschlossen ist.

22. Vorrichtung nach Anspruch 20, **dadurch gekennzeichnet, dass** der Rechner (08) zur Steuerung und/oder Überwachung der Druckmaschine als ein zur Druckmaschine gehörender Leitstand (08) ausgebildet oder zumindest in einem zur Druckmaschine gehörenden Leitstand (08) integriert ist.

23. Vorrichtung nach Anspruch 2, **dadurch gekennzeichnet, dass** eine am Umfang des Formzylinders (12) gewählte Bebilderungsposition der Bebilderungsvorrichtung (13) in Abhängigkeit von einer Winkellage dieses Formzylinders (12) gewählt ist.

24. Vorrichtung nach Anspruch 2, **dadurch gekennzeichnet, dass** eine in Umfangsrichtung des Formzylinders (12) gerichtete Bebilderungsgeschwindigkeit der Bebilderungsvorrichtung (13) in Abhängigkeit von einer Rotationsgeschwindigkeit dieses Formzylinders (12) gewählt ist.

25. Vorrichtung nach Anspruch 1, **dadurch gekennzeichnet, dass** der Rasterimageprozessor (03) in einem FPGA (Field Programmable Gate Array) realisiert ist.

26. Vorrichtung nach Anspruch 1 oder 8, **dadurch gekennzeichnet, dass** die Steuervorrichtung (14), der Rasterimageprozessor (03) und/oder die Schnittstelle (26) softwaretechnisch ausgebildet sind.

27. Vorrichtung nach Anspruch 1, **dadurch gekennzeichnet, dass** die Bebilderungsvorrichtung (13) das Druckbild an der Druckbildstelle auf einer Druckform ausbildet.

28. Vorrichtung nach Anspruch 27, **dadurch gekennzeichnet, dass** die Druckform für ein Nassoffsetdruckverfahren oder für ein feuchtmittellos arbeitendes Trockenoffsetdruckverfahren geeignet ist.

29. Vorrichtung nach Anspruch 27, **dadurch gekennzeichnet, dass** die Druckform wiederholt bebilderbar ist.

30. Vorrichtung nach Anspruch 27, **dadurch gekennzeichnet, dass** eine Druckform genau eine von einer Bebilderungsvorrichtung (13) zu bebildernde Druckbildstelle aufweist.

31. Vorrichtung nach Anspruch 1, **dadurch gekennzeichnet, dass** die Druckmaschine mindestens zwei von einer der Bebilderungsvorrichtungen (13) zu bebildernde Druckbildstellen aufweist, wobei in einem Betriebszustand der Druckmaschine eine der Bebilderungsvorrichtungen (13) mindestens eine Druckbildstelle bebildert, während die andere Druckbildstelle an einem laufenden Druckprozess dieser Druckmaschine beteiligt ist.

32. Vorrichtung nach Anspruch 1, **dadurch gekennzeichnet, dass** die Druckmaschine den durch die Druckmaschine transportierten Bedruckstoff direkt oder indirekt bedruckt.

33. Vorrichtung nach Anspruch 2, **dadurch gekennzeichnet, dass** eine Antriebssteuervorrichtung (22) zur Steuerung eines Antriebs des mindestens einen Formzylinders (12) vorgesehen ist.

34. Vorrichtung nach Anspruch 33, **dadurch gekennzeichnet, dass** die Antriebssteuervorrichtung (22) ein mit der Winkellage des Formzylinders (12) korrespondierendes Signal an die Steuervorrichtung (14) der diesen Formzylinder (12) bebildernden Bebilderungsvorrichtung (13) leitet.

35. Vorrichtung nach Anspruch 2, **dadurch gekennzeichnet, dass** der mindestens eine Formzylinder (12) in seiner Axialrichtung mehrere aufeinander folgende Abschnitte aufweist, wobei jeder Abschnitt mindestens eine Druckbildstelle aufweist.

36. Vorrichtung nach Anspruch 35, **dadurch gekennzeichnet, dass** in jedem Abschnitt des Formzylinders (12) in dessen Umfangsrichtung mehrere Druckbildstellen vorgesehen sind.

37. Vorrichtung nach Anspruch 35, **dadurch gekennzeichnet, dass** in jedem Abschnitt des Formzylinders (12) in dessen Umfangsrichtung zwei Druckbildstellen vorgesehen sind.

38. Vorrichtung nach Anspruch 35, **dadurch gekennzeichnet, dass** verschiedenen Abschnitten desselben Formzylinders (12) jeweils eine Bebilderungsvorrichtung (13) zugeordnet ist.

39. Vorrichtung nach Anspruch 35, **dadurch gekennzeichnet, dass** jedem Abschnitt eine Bebilderungsvorrichtung (13) zugeordnet ist.

40. Vorrichtung nach Anspruch 35, **dadurch gekennzeichnet, dass** dieselbe Bebilderungsvorrichtung (13) alle auf demselben Formzylinder (12) zu bebildernden Druckbildstellen in einem sequentiellen oder parallelen Arbeitsablauf bebildert.

41. Vorrichtung nach Anspruch 1, **dadurch gekennzeichnet, dass** die Druckmaschine als eine Rollenrotationsdruckmaschine oder als eine Bogenrotationsdruckmaschine ausgebildet ist.

42. Vorrichtung nach Anspruch 3, **dadurch gekennzeichnet, dass** die Formzylinder (12) keine formschlüssige oder mechanische Antriebsverbindung aufweisen und unabhängig voneinander angetrieben sind.

43. Vorrichtung nach Anspruch 3, **dadurch gekennzeichnet, dass** die Formzylinder (12) einzeln und unabhängig voneinander in einen laufenden Druckprozess einkoppelbar oder einzeln und unabhängig voneinander aus einem laufenden Druckprozess auskoppelbar sind.

44. Vorrichtung nach Anspruch 1, **dadurch gekennzeichnet, dass** in der Druckvorstufe ein Netzwerk (07) zur Kommunikation von in der Druckvorstufe zu verarbeitenden Daten vorgesehen ist.

45. Vorrichtung nach Anspruch 44, **dadurch gekennzeichnet, dass** der Rechner (01) in der Druckvorstufe an das Netzwerk (07) zur Kommunikation von in der Druckvorstufe zu verarbeitenden Daten angeschlossen ist.

46. Vorrichtung nach Anspruch 44, **dadurch gekennzeichnet, dass** der Rechner (08) zur Steuerung und/oder Überwachung der Druckmaschine mit dem in der Druckvorstufe vorgesehenen Netzwerk (07) zur Kommunikation von in der Druckvorstufe zu verarbeitenden Daten verbunden ist.

47. Vorrichtung nach Anspruch 1, 21 oder 44, **dadurch gekennzeichnet, dass** zumindest eine dem Netzwerk (19) zur Kommunikation zumindest von Bilddaten (02) und/oder dem Netzwerk (09) zur Steuerung und/oder Überwachung der Druckmaschine und/oder dem Netzwerk (07) zur Kommunikation von in der Druckvorstufe zu verarbeitenden Daten zugeordnete Signalleitung und/oder Übertragungsstrecke von mindestens zwei dieser Netzwerke (07; 09; 19) gemeinschaftlich genutzt ist.

48. Vorrichtung nach Anspruch 21, **dadurch gekennzeichnet, dass** mit dem Netzwerk (09) zur Steuerung und/oder Überwachung der Druckmaschine eine Sektionssteuervorrichtung (23) verbunden ist.

49. Vorrichtung nach Anspruch 48, **dadurch gekennzeichnet, dass** die Sektionssteuervorrichtung (23) innerhalb einer mehrere Formzylinder (12) aufweisenden Sektion zumindest eine Zuordnung von zu bebildernden Druckbildstellen zu den jeweiligen Formzylindern (12) steuert.

50. Vorrichtung nach Anspruch 3, **dadurch gekennzeichnet, dass** jeder eine zu bebildernde Druckbildstelle aufweisende Formzylinder (12) hinsichtlich einer in der Druckmaschine definierten Leitachse eine Leitachsposition (Φ; Φa; Φb) aufweist, wobei die der zu bebildernden Druckbildstelle des Formzylinders (12) zugeordnete Bebilderungsvorrichtung (13) die Druckbildstelle in Abhängigkeit von der Leitachsposition (Φ; Φa; Φb) dieses Formzylinders (12) bebildert.

51. Vorrichtung nach Anspruch 21, **dadurch gekennzeichnet, dass** ein Falzapparat (81) in das Netzwerk (09) zur Steuerung und/oder Überwachung der Druckmaschine eingebunden ist, wobei mindestens eine der in der Druckmaschine vorgesehenen Bebilderungsvorrichtungen (13) mindestens eine zu bebildernde Druckbildstelle in Abhängigkeit von einem Schnittregister des Falzapparates (81) bebildert.

52. Vorrichtung nach Anspruch 1, **dadurch gekennzeichnet, dass** die Bebilderungsvorrichtung (13) als ein einzelnes Lasersystem oder ein aus mehreren Lasern bestehendes Laserarray ausgebildet ist.

53. Vorrichtung nach Anspruch 1, **dadurch gekennzeichnet, dass** die Bebilderungsvorrichtung (13) als ein Inkjet-System ausgebildet ist.

54. Vorrichtung nach Anspruch 1, **dadurch gekennzeichnet, dass** die Bebilderungsvorrichtung (13) an der Druckbildstelle auf einem Bildträger ein latentes Druckbild ausbildet.

55. Vorrichtung nach Anspruch 1, **dadurch gekennzeichnet, dass** die Bebilderungsvorrichtung (13) Druckfarbe von einem Farbträger unter Verwendung des lichthydraulischen Effektes pixelweise auf den Bedruckstoff übertragt.

56. Vorrichtung nach Anspruch 1, **dadurch gekennzeichnet, dass** das Netzwerk (19) zur elektronischen Kommunikation zumindest von Bilddaten (02) an der Schnittstelle (26) jedes Rasterimageprozessors (03) die Datei mit Bilddaten (02) zu allen Druckbildern der Seite des Druckerzeugnisses simultan zur Verfügung stellt.

## Claims

1. An apparatus for forming a print image at at least one print-image location, comprising a printing press with at least one imaging apparatus (13) forming at least one print image in each case at a plurality of print-image locations, wherein the respective print images belong to the same page of a printed product to be produced with the printing press, wherein before the print images of the page of the printed product are formed the said page is present in the form of a file containing image data (02), wherein the file contains image data (02) on all the print images of the page of the printed product, wherein a raster-image processor (03) is associated with each print-image location, wherein each raster-image processor (03) converts only image data (02) of the print image - associated with the respective print-image location - of the page of the printed product into raster data (04), **characterized in that** a network (19) for the electronic communication at least of image data (02) is provided, wherein each raster-image processor (03) is attached to the said network (19) by an interface (26) which receives image data (02), and wherein the said network (19) makes the file with image data (02) on all print images of the page of the printed product available at the interface (26) of each raster-image processor (03).

2. An apparatus according to Claim 1, **characterized in that** the print-image location is situated on a forme cylinder (12).

3. An apparatus according to Claim 1, **characterized in that** the printing press comprises a plurality of forme cylinders (12) arranged one after the other in the conveying direction of a material for printing which is printed in the printing press.

4. An apparatus according to Claim 3, **characterized in that** an imaging apparatus (13) is associated in each case with a plurality of the forme cylinders (12).

5. An apparatus according to Claim 4, **characterized in that** each of the imaging apparatus (13) forms at least one print image in each case at the respective print-image location of the respective forme cylinder (12).

6. An apparatus according to Claim 1, **characterized in that** the respective print images print at least part of the same page of the printed product to be produced with the printing press.

7. An apparatus according to Claim 1, **characterized in that** the interface (26) of each raster-image processor (03) selectively removes from the network (19) for the electronic communication at least of image data (02) the part of the image data (02) to be rasterized in each case on the basis of arrangement information or allocation information relating to the print-image location and made available.

8. An apparatus according to Claim 1, **characterized in that** each imaging apparatus (13) and the associated interface (26) together with a control apparatus (14) controlling the imaging apparatus (13) are arranged in the printing press in each case.

9. An apparatus according to Claim 3, **characterized in that** an imaging apparatus (13) with a control apparatus (14) comprising a raster-image processor (03) is provided for each forme cylinder (12) of the printing press.

10. An apparatus according to Claim 3, **characterized in that** each forme cylinder (12) has a plurality of print-image locations in each case in its axial direction and/or in its peripheral direction.

11. An apparatus according to Claim 1, **characterized in that** the image data (02) are present in the form of a TIFF file, in the form of a postscript file or in the form of a file in a pdf format.

12. An apparatus according to Claim 1, **characterized in that** the network (19) for the electronic communication at least of image data (02) is constructed in the form of a local network (19).

13. An apparatus according to Claim 1, **characterized in that** the network (19) for the electronic communication at least of image data (02) is constructed in the form of a public network (19).

14. An apparatus according to Claim 1, **characterized in that** the interface (26) receives image data (02) transmitted in a hard-wired and/or wireless manner.

15. An apparatus according to Claim 1, **characterized in that** the interface (26) receives the image data (02) from a computer (01) of a preliminary printing stage.

16. An apparatus according to Claim 1, **characterized in that** a storage apparatus (06) is provided, wherein the storage apparatus (06) stores image data (02) received from the interface (26) before or after their conversion in the raster-image processor (03).

17. An apparatus according to Claim 8, **characterized in that** the control apparatus (14) calibrates raster points determined by the raster-image processor (03) in a manner dependent upon a location provided in the printing press for the print-image location.

18. An apparatus according to Claim 8, **characterized in that** the control apparatus (14) calibrates raster points determined by the raster-image processor (03) in a manner dependent upon a printing ink to be applied at the print-image location and/or upon a material for printing which is to be printed with the print image formed at the print-image location.

19. An apparatus according to Claim 8, **characterized in that** the control apparatus (14) calibrates raster points determined by the raster-image processor (03) in a manner dependent upon a signal of an inspection system arranged in the printing press and monitoring the printing process.

20. An apparatus according to Claim 8, **characterized in that** the control apparatus (14) is connected to a computer (08) for controlling and/or monitoring the printing press.

21. An apparatus according to Claim 20, **characterized in that** the computer (08) for controlling and/or monitoring the printing press is attached to a network (09) for controlling and/or monitoring the printing press.

22. An apparatus according to Claim 20, **characterized in that** the computer (08) for controlling and/or monitoring the printing press is constructed in the form of a control panel (08) belonging to the printing press or is at least incorporated in a control panel (08) belonging to the printing press.

23. An apparatus according to Claim 2, **characterized in that** an imaging position of the imaging apparatus (13) selected at the periphery of the forme cylinder (12) is selected in a manner dependent upon an angular position of the said forme cylinder (12).

24. An apparatus according to Claim 2, **characterized in that** an imaging speed of the imaging apparatus (13) directed at the periphery of the forme cylinder (12) is selected in a manner dependent upon a rotational speed of the said forme cylinder (12).

25. An apparatus according to Claim 1, **characterized in that** the raster-image processor (03) is formed in an FPGA (field programmable gate array).

26. An apparatus according to Claim 1 or 8, **characterized in that** the control apparatus (14), the raster-image processor (03) and/or the interface (26) are formed by software.

27. An apparatus according to Claim 1, **characterized in that** the imaging apparatus (13) forms the print image on a printing forme at the print-image location.

28. An apparatus according to Claim 27, **characterized in that** the printing forme is suitable for a wet-offset printing process or for a dry-offset printing process operating without dampening agent.

29. An apparatus according to Claim 27, **characterized in that** the printing forme is capable of being imaged repeatedly.

30. An apparatus according to Claim 27, **characterized in that** a printing forme has precisely one print-image location to be imaged by an imaging apparatus (13).

31. An apparatus according to Claim 1, **characterized in that** the printing press has at least two print-image locations to be imaged by one of the imaging apparatus (13), wherein in one operating state of the printing press one of the imaging apparatus (13) images at least one print-image location, whereas the other print-image location participates in a current printing process of the said printing press.

32. An apparatus according to Claim 1, **characterized in that** the printing press prints in a direct or indirect manner the material to be printed which is conveyed through the printing press.

33. An apparatus according to Claim 2, **characterized in that** a driving control apparatus (22) is provided for controlling a drive of the at least one forme cylinder (12).

34. An apparatus according to Claim 33, **characterized in that** the driving control apparatus (22) conveys a signal corresponding to the angular position of the forme cylinder (12) to the control apparatus (14) of the imaging apparatus (13) imaging the said forme cylinder (12).

35. An apparatus according to Claim 2, **characterized in that** in its axial direction the at least one forme cylinder (12) has a plurality of portions following one after the other, wherein each portion has at least one print-image location.

36. An apparatus according to Claim 35, **characterized in that** a plurality of print-image locations are provided in each portion of the forme cylinder (12) in the peripheral direction thereof.

37. An apparatus according to Claim 35, **characterized in that** two print-image locations are provided in each portion of the forme cylinder (12) in the peripheral direction thereof.

38. An apparatus according to Claim 35, **characterized in that** one imaging apparatus (13) is associated in each case with different portions of the same forme cylinder (12).

39. An apparatus according to Claim 35, **characterized in that** one imaging apparatus (13) is associated with each portion.

40. An apparatus according to Claim 35, **characterized in that** the same imaging apparatus (13) images all the print-image locations to be imaged on the same forme cylinder (12) in a sequential or parallel operating procedure.

41. An apparatus according to Claim 1, **characterized in that** the printing press is constructed in the form of a web-fed rotary printing press or in the form of a sheet-fed rotary printing press.

42. An apparatus according to Claim 3, **characterized in that** the forme cylinders (12) have no positively locking or mechanical driving connexion and are driven independently of one another.

43. An apparatus according to Claim 3, **characterized in that** the forme cylinders (12) are capable of being coupled individually and independently of one another into a running printing process or are capable of being uncoupled individually and independently of one another from a running printing process.

44. An apparatus according to Claim 1, **characterized in that** a network (07) for the communication of data to be processed in the preliminary printing stage is provided in the preliminary printing stage.

45. An apparatus according to Claim 44, **characterized in that** the computer (01) is attached in the preliminary printing stage to the network (07) for the communication of data to be processed in the preliminary printing stage.

46. An apparatus according to Claim 44, **characterized in that** the computer (08) for controlling and/or monitoring the printing press is connected to the network (07) provided in the preliminary printing stage for the communication of data to be processed in the preliminary printing stage.

47. An apparatus according to Claim 1, 21 or 44, **characterized in that** common use is made of at least one signalling line - associated with the network (19) for the communication at least of image data (02) and/or with the network (09) for controlling and/or monitoring the printing press and/or with the network (07) for the communication of data to be processed in the preliminary printing stage - and/or transmission path of at least two of the said networks (07; 09; 19).

48. An apparatus according to Claim 21, **characterized in that** a section-control apparatus (23) is connected to the network (09) for controlling and/or monitoring the printing press.

49. An apparatus according to Claim 48, **characterized in that** the section-control apparatus (23) inside a section comprising a plurality of forme cylinders (12) controls at least one correlation of print-image locations to be imaged with the respective forme cylinders (12).

50. An apparatus according to Claim 3, **characterized in that** with respect to a leading axle defined in the printing press each forme cylinder (12) comprising a print-image location to be imaged has a leading-axle position (φ; φa; φb), wherein the imaging apparatus (13) associated with the print-image location of the forme cylinder (12) to be imaged images the print-image location in a manner dependent upon the leading-axle position (φ; φa; φb) of the said forme cylinder (12).

51. An apparatus according to Claim 21, **characterized in that** a folder (81) is bound into the network (09) for controlling and/or monitoring the printing press, wherein at least one of the imaging apparatus (13) provided in the printing press images at least one print-image location to be imaged in a manner dependent upon a cutting register of the folder (81).

52. An apparatus according to Claim 1, **characterized in that** the imaging apparatus (13) is constructed in the form of an individual laser system or a laser array consisting of a plurality of lasers.

53. An apparatus according to Claim 1, **characterized in that** the imaging apparatus (13) is constructed in the form of an ink-jet system.

54. An apparatus according to Claim 1, **characterized in that** the imaging apparatus (13) forms a latent print image on an image carrier at the print-image location.

55. An apparatus according to Claim 1, **characterized in that** the imaging apparatus (13) transfers printing ink from an ink carrier onto the material to be printed whilst using the light-hydraulic effect pixel-wise.

56. An apparatus according to Claim 1, **characterized in that** the network (19) for the electronic communication at least of image data (02) at the interface (26) of each raster-image processor (03) makes the file with image data (02) on all print images of the page of the material to be printed available simultaneously.

## Revendications

1. Dispositif pour former une image à imprimer sur au moins un emplacement pour une image à imprimer, présentant une machine à imprimer avec au moins un dispositif d'imagerie (13), constituant en plusieurs points d'image à imprimer, chaque fois, au moins une image à imprimer, les images à imprimer respectives appartenant à la même face d'un produit à imprimer à fabriquer avec la machine à imprimer, sachant que la face du produit à imprimer, avant la formation de ses images à imprimer, se présente sous la forme d'un fichier contenant des données image (02), le fichier contenant des données image (02) afférentes à toutes les images à imprimer de la face du produit à imprimer, à chaque emplacement pour une image à imprimer étant associé un processeur d'images tramées (03), chaque processeur d'images tramées (03) ne convertissant que des données image (02) de l'image à imprimer associée à l'emplacement pour une image à imprimer respective de la face du produit à imprimer en des données tramées (04), **caractérisé en ce qu'**un réseau (19), pour la communication électronique au moins de données image (02), est prévu, chaque processeur d'images tramées (03) étant raccordé à ce réseau (19), avec une interface (26) recevant des données image (02), ce réseau (19) mettant à disposition, à l'interface (26) de chaque processeur d'images tramées (03), le fichier avec des données image (02), pour toutes les images à imprimer de la face du produit à imprimer.

2. Dispositif selon la revendication 1, **caractérisé en ce que** l'emplacement d'images à imprimer est disposé sur un cylindre de forme (12).

3. Dispositif selon la revendication 1, **caractérisé en ce que** la machine à imprimer présente plusieurs cylindres de forme (12), disposés les uns à la suite des autres, dans la direction de transport d'un matériau à imprimer, imprimé dans la machine à imprimer.

4. Dispositif selon la revendication 3, **caractérisé en ce que**, chaque fois, un dispositif d'imagerie (13) est associé à plusieurs des cylindres de forme (12).

5. Dispositif selon la revendication 4, **caractérisé en ce que** chacun des dispositifs d'imagerie (13) constitue, à l'emplacement d'image imprimée respectif du cylindre de forme (12) respectif, chaque fois, au moins une image à imprimer.

6. Dispositif selon la revendication 1, **caractérisé en ce que** les images à imprimer respectives impriment au moins une partie de la même face du produit à imprimer à fabriquer avec la machine à imprimer.

7. Dispositif selon la revendication 1, **caractérisé en ce que** l'interface (26) de chaque processeur d'images tramées (03) prélève, sélectivement, du réseau (19), pour communication électronique au moins de données image (02), la partie chaque fois à tramer des données image (02), d'après une information d'agencement tenue prête, ou d'après une information d'occupation, concernant l'emplacement d'image à imprimer.

8. Dispositif selon la revendication 1, **caractérisé en ce que** chaque dispositif d'imagerie (13) et l'interface (26) afférente sont disposés, conjointement, avec un dispositif de commande (14), commandant le dispositif d'imagerie (13), chaque fois dans la machine à imprimer.

9. Dispositif selon la revendication 3, **caractérisé en ce que**, pour chaque cylindre de forme (12) de la machine à imprimer, est prévu un dispositif d'imagerie (13) avec un dispositif de commande (14) présentant un processeur d'images tramées (03).

10. Dispositif selon la revendication 3, **caractérisé en ce que** chaque cylindre de forme (12) présente, dans sa direction axiale et/ou dans sa direction périphérique, chaque fois, plusieurs emplacements d'images à imprimer.

11. Dispositif selon la revendication 1, **caractérisé en ce que** les données image (02) se présentent sous la forme d'un fichier TIFF, sous la forme d'un fichier postscript, ou sous la forme d'un fichier sous un format PDF.

12. Dispositif selon la revendication 1, **caractérisé en ce que** le réseau (19) de communication électronique, au moins de données image (02), est réalisé sous la forme de réseau local (19).

13. Dispositif selon la revendication 1, **caractérisé en ce que** le réseau (19) de communication électronique, au moins de données image (02), est réalisé sous la forme de réseau public (19).

14. Dispositif selon la revendication 1, **caractérisé en ce que** l'interface (26) reçoit des données image (02) transmises par une ligne et/ou sans fil.

15. Dispositif selon la revendication 1, **caractérisé en ce que** l'interface (26) reçoit des données image (02) depuis un ordinateur (01) d'un étage préliminaire d'impression.

16. Dispositif selon la revendication 1, **caractérisé en ce qu'**un dispositif mémoire (06) est prévu, le dispositif mémoire (06) mémorisant les données image (02) reçues de l'interface (26), avant ou après leur conversion effectuée dans le processeur d'image tramée (03).

17. Dispositif selon la revendication 8, **caractérisé en ce que** le dispositif de commande (14) calibre des points de trame déterminés par le processeur d'images tramées (03), en fonction d'un site prévu pour l'emplacement d'images à imprimer, dans une machine à imprimer.

18. Dispositif selon la revendication 8, **caractérisé en ce que** le dispositif de commande (14) calibre des points de trame déterminés par le processeur d'images tramées (03), en fonction d'une encre d'impression à appliquer à l'emplacement d'images à imprimer et/ou d'un matériau à imprimer, à imprimer avec l'image à imprimer réalisée à l'emplacement d'image à imprimer.

19. Dispositif selon la revendication 8, **caractérisé en ce que** le dispositif de commande (14) calibre des points de trame déterminés par le processeur d'images tramées (03), en fonction d'un signal provenant d'un système d'inspection, disposé dans la machine à imprimer et surveillant le processus d'impression.

20. Dispositif selon la revendication 8, **caractérisé en ce que** le dispositif de commande (14) est relié à un ordinateur (08) pour la commande et/ou la surveillance de la machine à imprimer.

21. Dispositif selon la revendication 20, **caractérisé en ce que** l'ordinateur (08), pour la commande et/ou la surveillance de la machine à imprimer, est raccordé à un réseau (09) pour la commande et/ou la surveillance de la machine à imprimer.

22. Dispositif selon la revendication 20, **caractérisé en ce que** l'ordinateur (08), pour la commande et/ou la surveillance de la machine à imprimer, est réalisé sous la forme de pupitre de commande (08) appartenant à la machine à imprimer, ou, au moins, est intégré dans un pupitre de commande (08) appartenant à la machine à imprimer.

23. Dispositif selon la revendication 2, **caractérisé en ce qu'**une position d'imagerie, sélectionnée sur la périphérie du cylindre de forme (12) du dispositif d'imagerie (13), est choisie en fonction d'une position angulaire de ce cylindre de forme (12).

24. Dispositif selon la revendication 2, **caractérisé en ce qu'**une vitesse d'imagerie, orientée dans la direction périphérique du cylindre de forme (12) du dispositif d'imagerie (13), est choisie en fonction d'une vitesse de rotation de ce cylindre de forme (12).

25. Dispositif selon la revendication 1, **caractérisé en ce que** le processeur d'images tramées (03) est réalisé en une matrice de portes programmables sur site, FPGA (Field Programmable Gate Array).

26. Dispositif selon la revendication 1 ou 8, **caractérisé en ce que** le dispositif de commande (14), le processeur d'images tramées (03) et/ou l'interface (26) sont réalisés selon une technique logicielle.

27. Dispositif selon la revendication 1, **caractérisé en ce que** le dispositif d'imagerie (13) réalise l'image à imprimer à l'emplacement d'image à imprimer sur une forme d'impression.

28. Dispositif selon la revendication 27, **caractérisé en ce que** la forme d'impression convient pour un procédé d'impression en offset humide, ou pour un procédé d'impression en offset sec, travaillant sans agent d'humidification.

29. Dispositif selon la revendication 27, **caractérisé en ce que** la forme d'impression est imageable de façon répétée.

30. Dispositif selon la revendication 27, **caractérisé en ce qu'**une forme d'impression présente précisément un emplacement d'images à imprimer, devant être imagé par un dispositif d'imagerie (13).

31. Dispositif selon la revendication 1, **caractérisé en ce que** la machine à imprimer présente au moins deux emplacements d'images à imprimer, devant être imagés par l'un des dispositifs d'imagerie (13), sachant que, dans un état de fonctionnement de la machine à imprimer, l'un des dispositifs d'imagerie (13) image au moins un emplacement d'images à imprimer, tandis que l'autre emplacement d'image à imprimer participe à un processus d'impression en cours de cette machine à imprimer.

32. Dispositif selon la revendication 1, **caractérisé en ce que** la machine à imprimer imprime, directement ou indirectement, le matériau à imprimer transporté à travers la machine à imprimer.

33. Dispositif selon la revendication 2, **caractérisé en ce qu'**un dispositif de commande d'entraînement (22) est prévu pour commander un entraînement du au moins un cylindre de forme (12).

34. Dispositif selon la revendication 33, **caractérisé en ce que** le dispositif de commande d'entraînement (22) guide un signal, correspondant à la position angulaire du cylindre de forme (12), vers le dispositif de commande (14) du dispositif d'imagerie (13) imageant ce cylindre de forme (12).

35. Dispositif selon la revendication 2, **caractérisé en ce que** le au moins un cylindre de forme (12) présente, dans sa direction axiale, plusieurs tronçons se suivant les uns les autres, chaque tronçon présentant au moins un emplacement d'image à imprimer.

36. Dispositif selon la revendication 35, **caractérisé en ce que**, en chaque tronçon du cylindre de forme (12), sont prévus, dans sa direction périphérie, plusieurs emplacements d'image à imprimer.

37. Dispositif selon la revendication 35, **caractérisé en ce que**, dans chaque tronçon de cylindre de forme (12), sont prévus, dans sa direction périphérique, deux emplacements d'images à imprimer.

38. Dispositif selon la revendication 35, **caractérisé en ce qu'**aux différents tronçons du même cylindre de forme (12) est chaque fois associé un dispositif d'imagerie (13).

39. Dispositif selon la revendication 35, **caractérisé en ce qu'**à chaque tronçon est associé un dispositif d'imagerie (13).

40. Dispositif selon la revendication 35, **caractérisé en ce que** le même dispositif d'imagerie (13) image tous les emplacements d'images à imprimer devant être imagés sur le cylindre de forme (12), en un déroulement opératoire séquentiel ou parallèle.

41. Dispositif selon la revendication 1, **caractérisé en ce que** la machine à imprimer est réalisée sous la forme de machine à imprimer rotative bobines, ou sous forme de machine à imprimer rotative à feuilles.

42. Dispositif selon la revendication 3, **caractérisé en ce que** les cylindres de forme (12) ne présentent aucune liaison d'entraînement opérant par liaison à ajustement de forme, ou mécanique, et sont entraînés indépendamment les uns des autres.

43. Dispositif selon la revendication 3, **caractérisé en ce que** les cylindres de forme (12) sont susceptibles d'être couplés, individuellement et indépendamment les uns des autres, en un processus d'impression en cours, ou bien sont susceptible d'être désaccouplés, individuellement ou indépendamment les uns des autres, d'un processus d'impression en cours.

44. Dispositif selon la revendication 1, **caractérisé en ce que**, dans l'étage préliminaire d'impression, est prévu un réseau (07) de communication de données à traiter dans l'étage préliminaire d'impression.

45. Dispositif selon la revendication 44, **caractérisé en ce que** l'ordinateur (01), dans l'étage préliminaire d'impression, est raccordé au réseau (07) de communication de données à traiter dans l'étage préliminaire d'impression.

46. Dispositif selon la revendication 44, **caractérisé en ce que** l'ordinateur (08), pour la commande et/ou la surveillance de la machine à imprimer, est relié au réseau (07) prévu dans l'étage préliminaire d'impression pour communication de données à traiter dans l'étage préliminaire d'impression.

47. Dispositif selon la revendication 1, 21 ou 44, **caractérisé en ce qu'**au moins une ligne de signalisation et/ou circuit de transmission, associé(e) au réseau (19) pour communication, au moins, de données image (02), et/ou associé(e) au réseau (9) pour commande et/ou surveillance de la machine à imprimer, et/ou associé(e) au réseau (07) de communication de données à traiter dans l'étage préliminaire d'impression, est utilisé(e) en commun par au moins deux de ces réseaux (07 ;09 ;19).

48. Dispositif selon la revendication 21, **caractérisé en ce qu'**un dispositif de commande de section (23) est relié au réseau (09) de commande et/ou de surveillance de la machine à imprimer.

49. Dispositif selon la revendication 48, **caractérisé en ce que** le dispositif de commande de section (23), à l'intérieur d'une section présentant plusieurs cylindres de forme (12), commande au moins une association d'emplacements d'images à imprimer devant être imagés, envers des cylindres de forme (12) respectifs.

50. Dispositif selon la revendication 3, **caractérisé en ce que** chaque cylindre de forme (12), présentant un emplacement d'images à imprimer devant être imagé, présente, du point de vue d'un axe directeur défini dans la machine à imprimer, une position d'axe directeur (φ ; φa ; φb), sachant que le dispositif d'imagerie (13), associé à l'emplacement d'images à imprimer devant être imagé, du cylindre de forme (12), image l'emplacement d'images à imprimer, en fonction de la position d'axe directeur (φ ; φa ; φb) de ce cylindre de forme.

51. Dispositif selon la revendication 21, **caractérisé en ce qu'**un appareil de pliage (81) est intégré dans le réseau (09) pour la commande et/ou la surveillance de la machine à imprimer, sachant qu'au moins l'un des dispositifs d'imagerie (13) prévus dans la machine à imprimer image au moins un emplacement d'image à imprimer devant être imagé, en fonction d'un repérage de coupe de l'appareil de pliage (81).

52. Dispositif selon la revendication 1, **caractérisé en ce que** le dispositif d'imagerie (13) est réalisé sous la forme de système à laser individuel, ou d'une batterie de lasers, constituée de plusieurs lasers.

53. Dispositif selon la revendication 1, **caractérisé en ce que** le dispositif d'imagerie (13) est réalisé sous la forme de système Inkjet.

54. Dispositif selon la revendication 1, **caractérisé en ce que** le dispositif d'imagerie (13) constitue, à l'emplacement d'images à imprimer, sur un support d'image, une image à imprimer latente.

55. Dispositif selon la revendication 1, **caractérisé en ce que** le dispositif d'imagerie (13) transmet de l'encre d'impression, depuis un support d'encre, en utilisant l'effet photohydraulique, en mode pixel, au matériau à imprimer.

56. Dispositif selon la revendication 1, **caractérisé en ce que** le réseau (19), de communication électronique au moins de données image (02), à l'interface (26) de chaque processeur d'images tramées (03), met à disposition, simultanément, les fichiers comprenant des données image (02) vers toutes les images à imprimer de la face du produit à imprimer.
